# EUROPÄISCHE PATENTSCHRIFT

(11) **EP 2 254 779 B1**
(45) Veröffentlichungstag und Bekanntmachung des Hinweises auf die Patenterteilung: **06.11.2013**
(21) Anmeldenummer: 08873289.6
(22) Anmeldetag: 19.12.2008
(51) Int. Cl.: B60T 13/66

(54) **BREMSANLAGE FÜR EIN FAHRZEUG**
BRAKE SYSTEM FOR A VEHICLE
INSTALLATION DE FREINAGE POUR VÉHICULE

(30) Priorität: 14.03.2008 DE 102008014458
(43) Veröffentlichungstag der Anmeldung: 01.12.2010
(73) Patentinhaber: WABCO GmbH, 30453 Hannover (DE)
(72) Erfinder: BENSCH, Uwe, 30161 Hannover (DE); DJEUTCHOUANG DJIYA, Guy, Alain, 30459 Hannover (DE); FÖRSTER, Henning, 31171 Nordstemmen (DE); GRIMM, Matthias, 30457 Hannover (DE); JANTZ, Olaf, 30455 Hannover (DE); KIEL, Bernd-Joachim, 31515 Wunstorf (DE); MENZE, Wilfried, 31832 Springe (DE); ROSENDAHL, Hartmut, 30167 Hannover (DE); SCHÄL, Andreas, Nordstemmen (DE); STRACHE, Wolfgang, 30966 Hemmingen (DE); STRUWE, Otmar, 30163 Hannover (DE)
(74) Vertreter: Lauerwald, Jörg
(86) Internationale Anmeldenummer: PCT/EP2008/010890
(87) Internationale Veröffentlichungsnummer: WO 2009/112065

(56) Entgegenhaltungen:
- EP-A- 2 055 542
- WO-A-2007/074219
- US-A- 4 586 584

## Beschreibung

Die Erfindung betrifft eine Bremsanlage für ein Fahrzeug, insbesondere ein Nutzfahrzeug, mit einer Feststellbremsfunktion. Die Hauptaufgabe der Feststellbremsfunktion besteht darin, dieses Fahrzeug festzustellen und somit gegen ein unbeabsichtigtes Wegrollen zu sichern. Die Feststellbremsfunktion beinhaltet eine Feststellbremssteuerfunktion, welche das Feststellen des Fahrzeugs elektronisch steuert.

Ferner weist diese Bremsanlage eine Einrichtung mit einer zweiten Funktion auf, welche sich von der Feststellbremsfunktion unterscheidet. Diese Einrichtung kann der Bremsanlage oder dem Fahrzeug zugeordnet sein. Im Falle einer Zuordnung zur Bremsanlage ist diese Einrichtung eine elektronische und/oder elektropneumatische Einrichtung der Bremsanlage. Insbesondere kann es sich bei dieser Einrichtung um eine Luftaufbereitungseinrichtung, einen Achsmodulator, ein Anhängersteuerventil, eine Steuereinrichtung eines elektronischen Bremssystems oder eine Fahrdynamikregelungseinrichtung handeln. Zusätzlich oder alternativ kann diese Einrichtung dem Fahrzeug zugeordnet sein. Insbesondere kann es sich bei der Einrichtung um eine Luftaufbereitungseinrichtung des Fahrzeugs handeln, welche ggf. auch der Bremsanlage zuzuordnen ist. Alternativ kann die Einrichtung eine dem Fahrzeug zugeordnete Luftfederungseinrichtung sein, mittels welcher pneumatisch das Fahrzeug, Teile des Fahrzeugs und/oder ein ggf. angekoppeltes Anhängefahrzeug angehoben oder abgesenkt werden kann.

Die Einrichtung ist in der Regel eines von mehreren Bauteilen, insbesondere der Bremsanlage, welche an einem Rahmen des Fahrzeugs angeordnet sind. Für die vorteilhafte Anordnung derartiger Bauteile am Rahmen steht nur wenig Platz zur Verfügung. Zum einen weist nämlich der Rahmen, welcher in der Regel ein Leiterrahmen ist, nur wenige Orte auf, an welchen derartige Bauteile und somit auch die Einrichtung befestigt werden kann. Darüber hinaus ist oftmals eine Anordnung an Orten erwünscht, welche zu gleich langen Leitungswegen, insbesondere von Druckluftleitungen, zu Einrichtungen an der linken Seite des Fahrzeugs und zu Einrichtungen an der rechten Seite des Fahrzeugs führt. Darüber hinaus müssen diese Bauteile bzw. muss diese Einrichtung vor Nässe, Schmutz und Beschädigungen geschützt sein. Ein Schutz vor Nässe, Schmutz und Beschädigungen ist an bevorzugten Orten am Fahrzeugrahmen leichter möglich als an weniger bevorzugten Orten. Somit schränkt auch die Forderung des Schutzes der Einrichtung vor Feuchtigkeit, Schmutz und Beschädigung die Wahl eines vorteilhaften Ortes bei der Anordnung der Einrichtung am Rahmen des Fahrzeugs weiter ein. Insgesamt steht bei derartigen bekannten Bremsanlagen somit nur wenig geeigneter Platz am Rahmen des Fahrzeugs zur Verfügung. Außerdem sind bei der bekannten Anordnung der Montageaufwand und damit die Montagekosten hoch. Darüber hinaus sind derartige bekannte Bremsanlagen auch in der Herstellung teuer.

Das Dokument US-4,586,584 offenbart eine Druckluftbremsanlage für einen Lastkraftwagen mit verschiedenen Kontrollventilen, die die Luftversorgung von Untersystemen, Anhängerbremsen und Parkbremsen kontrollieren. Die Kontrollventile sind auf einem gemeinsamen Verteiler montiert, entfernt von der Instrumententafel, wodurch die Installation und Wartung erleichtert wird.

Das Dokument WO 2007/074219 A1 offenbart eine Bremsvorrichtung mit einer Betriebsbremse mit einem Vorderbremssystem, die auf einen Vorderbremsaktor wirkt und von einer Steuereinheit kontrolliert wird. Weiterhin weist die Vorrichtung ein Parkbremssystem mit einem Parkhinterbremsaktor auf, welches von einer Steuereinrichtung kontrolliert wird, welche das Fahrzeug in einen ersten Parkbremsmodus versetzen kann, in dem die Hinterräder blockiert sind.

Der Erfindung liegt deshalb das Problem zugrunde, bei der Anordnung derartiger bekannter Bremsanlagen Platz zu sparen sowie Montagekosten und Herstellungskosten derartiger Bremsanlagen zu senken.

Die Erfindung löst dieses Problem mit dem kennzeichnenden Merkmal von Anspruch 1. Die Einrichtung der erfindungsgemäßen Bremsanlage weist zusätzlich zu der zweiten Funktion die Feststellbremssteuerfunktion auf. Somit kann auf eine in einer anderen Einrichtung separat angeordnete Elektronik, welche die Feststellbremssteuerfunktion bereitstellt, verzichtet werden. Die Anzahl von Gehäusen und ggf. auch die Anzahl elektrischer und/oder pneumatischer Leitungen zwischen den verbleibenden Gehäusen reduziert sich verglichen mit dem Stand der Technik. Dies spart Platz, insbesondere am Rahmen des Fahrzeugs bzw. an Orten an Rahmen, welche besonders bevorzugt zur Anordnung der Elektronik und der Einrichtung geeignet sind. Ferner wird durch die geringere Anzahl von Bauteilen bzw. geringere Anzahl von Anschlüssen der Montageaufwand verringert. Die Einrichtung mit der zweiten Funktion und der Feststellbremssteuerfunktion ist zudem kostengünstiger herstellbar als die Einrichtung mit der zweiten Funktion und eine separate Elektronik mit der Feststellbremssteuerfunktion. Insgesamt ist die erfindungsgemäße Bremsanlage somit leichter und platzsparender verbaubar und kostengünstiger herstellbar als die bekannten Bremsanlagen nach dem Stand der Technik.

Die Bremsanlage weist neben der Feststellbremsfunktion eine Betriebsbremsfunktion auf. Diese Betriebsbremsfunktion dient zum Einbremsen des Fahrzeugs mittels Bremsen. Bspw. werden mittels der Betriebsbremsfunktion Bremszylinder dieser Bremsen pneumatisch betätigt, indem Membranteile dieser Bremszylinder mit Druckluft aus einem Druckluftvorratsbehälter belüftet werden. Alternativ oder zusätzlich können diese Bremsen elektrisch mittels mechanischer Aktuatoren betätigt werden. Bauteile der Bremsanlage können ggf. sowohl der Betriebsbremsfunktion als auch der Feststellbremsfunktion zugeordnet sein. D.h. die Betriebsbremsfunktion und die Feststellbremsfunktion können zumindest teilweise von identischen Bauteilen der Bremsanlage bereitgestellt werden.

In einer vorteilhaften Weiterbildung ist wenigstens ein Magnetventil in die Einrichtung integriert, mittels dessen ein pneumatischer Druck zum Belüften und Entlüften von Federspeicherteilen von Federspeicherbremszylindern elektropneumatisch aussteuerbar ist. Die Feststellbremsfunktion ist somit elektropneumatisch bereitstellbar. Diese Integration des Magnetventils in die Einrichtung ist insbesondere dann vorteilhaft, wenn die Einrichtung wenigstens ein zweites Ventil zur Bereitstellung der zweiten Funktion beinhaltet. Hierdurch werden Ventile in einen einheitlichen Ventilblock zusammengefasst, was die Kosten der Bremsanlage weiter senkt.

In einer alternativen vorteilhaften Weiterbildung ist das o.g. Magnetventil nicht in die Einrichtung, sondern in wenigstens eine Ventileinheit integriert, welche über einen Flansch an der Einrichtung befestigt ist. Dieser Flansch weist wenigstens eine elektrische und wenigstens eine pneumatische Verbindung zwischen der Einrichtung und der Ventileinheit auf. Vorteilhafterweise ist die Einrichtung hierbei eine Luftaufbereitungseinrichtung. Die Verbindung über den Flansch senkt Kosten, da zusätzliche elektrische und pneumatische Leitungen zwischen der Einrichtung und der Ventileinheit entfallen können.

Ggf. sind modular aufgebaut mehrere Ventileinheiten an der Einrichtung unmittelbar oder mittelbar jeweils über einen Flansch befestigt. Im Falle einer mittelbaren Befestigung ist eine Ventileinrichtung über einen Flansch mit einer weiteren Ventileinrichtung verbunden, welche ihrerseits über einen Flansch mit der Einrichtung oder noch einer weiteren Ventileinheit verbunden ist. Somit kann in modularer Bauart eine Bremsanlage mit einer Anzahl von Ventileinheiten hergestellt werden, welche für den Einbau in ein Fahrzeug benötigt wird. Für Bremsanlagen kann somit kostengünstig eine Einrichtung unabhängig von der Anzahl der verwendeten Ventileinheiten vorgesehen werden.

Besonders vorteilhaft ist das Magnetventil über die Einrichtung mit einem Luftdruckvorrat und über diese Einrichtung mit den Federspeicherteilen der Federspeicherbremszylinder pneumatisch verbindbar. Dies verringert besonders effektiv die Anzahl und/oder Länge elektrischer und/oder pneumatischer Verbindungen, insbesondere dann, wenn die Einrichtung eine Luftaufbereitungseinrichtung ist. Überdies ergibt sich der Vorteil, dass die angeflanschte Ventileinheit ausgetauscht werden kann, ohne dass hierzu zusätzliche elektrische und/oder pneumatische Leitungen entfernt und wieder angeschlossen werden müssten. Die Ventileinheit ist nämlich leicht über den Flansch von der Einrichtung zu entfernen bzw. an dieser Einrichtung zu befestigen. Dies verringert Kosten bei Wartung und Reparatur der Bremsanlage.

In einer Weiterbildung kann die Einrichtung mehrere Einheiten umfassen, wobei die Ventileinheit an einer dieser Einheiten befestigt ist. In dem Fall, dass die Einrichtung eine Luftaufbereitungseinrichtung ist, können die Einheiten bspw. eine Lufttrocknungseinheit, eine Druckbegrenzungseinheit und/oder eine Mehrkreisschutzventileinheit sein. Die Ventileinheit kann an einer beliebigen Einheit der Einrichtung befestigt sein. Die Ventileinheit ist somit leicht von einer derartigen Einheit entfernbar und kann ebenso leicht wieder an diese Einheit angeflanscht werden, was zu geringen Reparaturkosten bei einem Austausch der Ventileinheit führt.

Bevorzugt weist die Bremsanlage wenigstens ein Relaisventil auf, über welches das Ventil mit dem Federspeicherteil der Federspeicherbremszylinder pneumatisch verbindbar ist. Dieses Relaisventil sorgt für eine Luftmengenverstärkung des mittels des Magnetventils ausgesteuerten pneumatischen Druckes. Mittels des Relaisventils können die Federspeicherbremszylinder somit schneller belüftet bzw. entlüftet werden. Dieses Relaisventil kann extern verbaut und über wenigstens eine Druckluftleitung mit einem Gehäuse, in welchem sich das Magnetventil befindet, bzw. mit diesem Magnetventil verbunden sein.

In einer Weiterentwicklung der erfindungsgemäßen Bremsanlage ist dieses Relaisventil in die Einrichtung integriert. Durch die Integration auch des Relaisventils werden weitere Kosten gespart, da kein separates Gehäuse für das Relaisventil hergestellt werden muss und der Verrohrungsaufwand verringert wird.

Alternativ kann das Relaisventil an der Einrichtung angeordnet, d.h. an diese Einrichtung angeflanscht bzw. in die angeflanschte Ventileinheit integriert sein. Das Relaisventil ist somit entweder alleine oder zusammen mit dem Magnetventil der Ventileinheit an die Einrichtung angeflanscht. Auch hierdurch ergeben sich Vorteile aufgrund der Integration in die angeflanschte Ventileinheit bzw. aufgrund des Anflanschens an die Einrichtung. Im Falle des Anflanschens führen pneumatische Eingänge und Ausgänge sowie elektrische Leitungen bei Kombination mit einem Magnetventil über den Flansch. Deshalb kann ein defektes Relaisventil leicht und kostengünstig ausgetauscht werden, ohne dass hierfür zeitweilig Anschlussleitungen entfernt werden müssten.

Bevorzugterweise ist die Einrichtung eine Luftaufbereitungseinrichtung. Diese Luftaufbereitungseinrichtung bereitet Druckluft derart auf, dass sie in pneumatischen Systemen verwendet werden kann. Bspw. wird die Druckluft in einer Luftaufbereitungseinrichtung getrocknet. Die aufbereitete Luft wird der Bremsanlage und/oder einer anderen Einrichtung des Fahrzeugs bereitgestellt. Eine andere Einrichtung des Fahrzeugs, welche Druckluft benötigt, ist insbesondere eine Luftfederungseinrichtung, mittels welcher das Fahrzeug, Teile des Fahrzeugs oder ggf. ein angehängtes Anhängefahrzeug angehoben bzw. abgesenkt werden können.

Alternativ ist die Einrichtung bevorzugt ein Anhängersteuerventil, mittels welchem einem an dieses Fahrzeug angehängten Anhängefahrzeug Druckluft zum Abbremsen und/oder Feststellen dieses Anhängefahrzeugs bereitstellbar ist. Das Anhängersteuerventil ist nämlich eine Einheit, welche wenigstens ein Ventil aufweist. Deshalb ist es vorteilhaft, das Magnetventil zum elektropneumatischen Aussteuern des pneumatischen Drucks für die Feststellbremsfunktion in das Anhängersteuerventil zu integrieren bzw. in eine Ventileinheit zu integrieren, welche an das Anhängersteuerventil angeflanscht ist.

In einer weiteren alternativen Ausführungsform ist die Einrichtung eine Luftfederungseinrichtung des Fahrzeugs. Diese Luftfederungseinrichtung weist wenigstens ein Ventil auf, mittels dessen ein pneumatischer Druck aussteuerbar und zum Anheben oder Absenken des Fahrzeugs und/oder ggf. eines Anhängers/Aufliegers oder Teilen des Fahrzeugs bzw. Anhängers/Aufliegers bereitstellbar ist. Es können hierbei die Luftfederungseinrichtung und das Magnetventil zum Aussteuern des pneumatischen Druckes für die Feststellbremsfunktion über einen gemeinsamen Anschluss mit Druckluft versorgt werden. Darüber hinaus können das Ventil der Luftfederungseinrichtung und das Magnetventil zur Bereitstellung der Feststellbremsfunktion vorteilhaft in ein gemeinsames Gehäuse integriert werden bzw. sich in aneinander angeflanschten Gehäusen befinden, da hierdurch Kosten bei der Herstellung und der Montage der Bremsanlage gespart werden. Außerdem spart diese Integration bzw. dieses Anflanschen Platz. Ferner spart die gemeinsame Nutzung einer elektronischen Steuerung für die Luftfedereinrichtung und die Feststellbremsfunktion Kosten ein.

In einer bevorzugten Ausführungsform im Falle einer elektropneumatisch bereitstellbaren Feststellbremsfunktion mit einem in die Einrichtung integrierten Magnetventil ist die Einrichtung bevorzugt ein Achsmodulator mit wenigstens zwei Kanälen, wobei das Magnetventil einem ersten Kanal zugeordnet ist und wobei wenigstens ein zweites Ventil, welches bevorzugt ein Magnetventil ist, wenigstens einem zweiten Kanal zugeordnet ist. Bevorzugt sind ein oder zwei zweite Kanäle mit jeweils wenigstens einem zweiten Ventil vorgesehen. Mittels des zweiten Ventils ist ein zweiter pneumatischer Druck zum Belüften und Entlüften von Bremszylindern für die Betriebsbremsfunktion aussteuerbar. Somit sind Ventile zum Aussteuern der pneumatischen Drücke für die Betriebsbremsfunktion und für die Feststellbremsfunktion in einem gemeinsamen Gehäuse integriert. Hierdurch ergeben sich Kostenvorteile.

Für die Variante mit einem zweiten Kanal wird bevorzugt ein bekannter 2-Kanal-Achsmodulator mit ursprünglich zwei zweiten Kanälen verwendet, welcher derart modifiziert ist, dass einer dieser zweiten Kanäle als erster Kanal nutzbar ist. Eine derartige Modifikation kann von einem Fachmann problemlos vorgenommen werden.

Für die Variante mit zwei zweiten Kanälen wird ein bekannter 2-Kanal-Modulator um einen ersten Kanal für die Feststellbremsfunktion zu einem 3-Kanal-Modulator erweitert. In allen Varianten ist eine Elektronik zur Bereitstellung der Feststellbremssteuerfunktion, d.h. zur Steuerung der Feststellbremsfunktion einschl. des Magnetventils des ersten Kanals, mit einer Steuerung der Ventile der zweiten Kanäle in einem gemeinsamen Gehäuse zusammengefasst, wobei dieses Gehäuse entweder ein Gehäuse des Modulators oder ein an diesen Modulator angeflanschtes Gehäuse ist.

In einer Weiterentwicklung dieser bevorzugten Ausführungsform ist in den Achsmodulator wenigstens ein Relaisventil integriert oder es ist wenigstens ein Relaisventil an diesen Achsmodulator angeflanscht, wobei das Magnetventil über dieses Relaisventil pneumatisch mit den Federspeicherteilen der Bremszylinder verbindbar ist. Das Relaisventil ist kostengünstig in den Achsmodulator zu integrieren bzw. an diesen anzuflanschen.

In einer alternativen Ausführungsform der Bremsanlage ist die Einrichtung ein Zentralmodul eines elektronischen Bremssystems. Die zweite Funktion ist hierbei eine zentrale Steuerfunktion dieses elektronischen Bremssystems. Hierdurch werden vorteilhaft und Kosten sparend Elektroniken zur Steuerung des elektronischen Bremssystems und zur Steuerung der Feststellbremsfunktion zusammengefasst.

Ebenso vorteilhaft ist es, wenn alternativ die Einrichtung ein Modul einer Fahrdynamikregelung ist und die zweite Funktion eine Regelung der Fahrdynamik des Fahrzeugs und/oder eines ggf. vorhandenen Anhängefahrzeugs ist. Die Fahrdynamikregelung greift in die Motorsteuerung und in die Steuerung der Bremsen ein, um hierdurch die Fahrstabilität des Fahrzeugs zu erhöhen. Hierfür sind verschiedene Sensoren vorgesehen, mittels derer ein Fahrzustand ermittelbar ist, wobei in Erwiderung auf einen ermittelten Fahrzustand Bremseingriffe und Eingriffe beim Antrieb vornehmbar sind. Durch die Integration der Feststellbremssteuerfunktion zusammen mit der Fahrdynamikregelung in ein Modul werden wieder Kosten gespart.

In einer Weiterentwicklung weist das Modul der Fahrdynamikregelung wenigstens einen Sensor auf. Dieser Sensor kann ein Beschleunigungssensor und/oder Gierratensensor oder ein anderer Sensor sein, durch welchen Daten eines Fahrzustandes sensierbar sind. Diese sensierten Daten sind der Fahrdynamikregelung bereitstellbar. Der Sensor kann kostengünstig und platzsparend in dem Modul angeordnet werden.

Bevorzugt wirkt die Fahrdynamikregelung im Falle eines bestimmungsgemäß funktionierenden elektronischen Bremssystems auf die Betriebsbremsfunktion, wobei gezielt Bremsen an einzelnen Rädern des Fahrzeugs über dieses elektronische Bremssystem mittels der Betriebsbremsfunktion betätigbar sind. Entweder liefert hierbei das Modul der Fahrdynamikregelung Sensorsignale an das elektrische Bremssystem, welches diese Sensorsignale auswertet und ggf. Bremseingriffe an einzelnen Rädern vornimmt. Alternativ wertet das Modul der Fahrdynamikregelung selbst die Sensorsignale aus und fordert selbst Bremseingriffe an einzelnen Rädern an. Die Fahrdynamikregelung ist somit im Falle des bestimmungsgemäß funktionierenden elektronischen Bremssystems unabhängig von der Feststellbremsfunktion, welche in diesem Modul angeordnet ist.

Im Falle des ausgefallenen elektronischen Bremssystems sind jedoch von der Fahrdynamikregelung die Bremsen an Rädern, insbesondere an einer Hinterachse, des Fahrzeugs mittels der Feststellbremsfunktion betätigbar. Somit kann das Fahrzeug von der Fahrdynamikregelung bei einem Ausfall der Betriebsbremsfunktion mittels der Feststellbremsfunktion eingebremst werden. Diese Weiterbildung der Bremsanlage erhöht somit vorteilhaft die Sicherheit.

Alternativ oder zusätzlich zu elektropneumatischen Bremszylindern sind elektromechanische Betätigungsorgane mittels der Feststellbremsfunktion betätigbar. Das Betätigen wird hierbei mittels der Feststellbremssteuerfunktion gesteuert. Hierbei kann eine gemeinsame Elektronik für die Feststellbremssteuerfunktion und für eine Steuerung der zweiten Funktion bzw. für die zweite Funktion in der Einrichtung vorgesehen sein. Leistungsendstufen zur Bereitstellung von elektrischen Strömen zur Betätigung der elektromechanischen Betätigungsorgane bzw. Aktuatoren können hingegen getrennt von dieser Einrichtung angeordnet sein. Auch können der Feststellbremsfunktion zugeordnete Leistungsendstufen getrennt von weiteren Leistungsendstufen, bspw. zur Bereitstellung der Betriebsbremsfunktion, angeordnet sein.

Bevorzugt weisen erste Bremsen an dem Fahrzeug, welches in diesem Fall ein Zugfahrzeug ist, diese elektromechanischen Betätigungsorgane auf, während ein an das Zugfahrzeug angekoppeltes Anhängefahrzeug pneumatisch betätigbare Bremszylinder aufweist. Diese Betätigungsorgane und diese Bremszylinder sind mittels der Feststellbremsfunktion betätigbar. An das Zugfahrzeug, welches elektromechanische Betätigungsorgane aufweist, können folglich gebräuchliche Anhängefahrzeuge, welche pneumatisch betätigbare Bremszylinder aufweisen, angekoppelt werden.

Die pneumatischen Drücke zur Betätigung der pneumatisch betätigbaren Bremszylinder eines Anhängefahrzeugs werden mittels im Zugfahrzeug befindlichen Magnetventilen ausgesteuert. Vorzugsweise werden hierbei ein bistabiles 3/2-Wege-Ventil und ein Haltenventil verwendet. Diese Ventile sind vorzugsweise in die Einrichtung, welche insbesondere eine Luftaufbereitungseinrichtung ist, integriert. Es braucht somit Druckluft von der Luftaufbereitungseinheit nicht über lange Druckluftleitungen zu diesen Magnetventilen geführt werden. Die Luftaufbereitungseinheit muss lediglich einen zusätzlichen Ausgangsanschluss aufweisen, über welchen eine Steuerleitung des Anhängersteuerventils mit Druckluft versorgt wird.

Die Magnetventile zur Aussteuerung des pneumatischen Drucks für das Anhängefahrzeug können alternativ auch in ein Anhängersteuerventil integriert sein. Auch ein Anflanschen dieser Ventile an das Anhängersteuerventil oder an die Luftaufbereitungseinheit ist möglich. Darüber hinaus können die Leistungsendstufen zur Ansteuerung der elektromechanischen Betätigungsorgane modular an die Einrichtung, insbesondere die Luftaufbreitungseinrichtung, angeflanscht sein.

Bevorzugt weist die Einrichtung eine erste Elektronik auf, mittels der die Feststellbremssteuerfunktion und auch die zweite Funktion bzw. eine Steuerung oder Regelung der zweiten Funktion bereitstellbar ist. Diese gemeinsame erste Elektronik spart Kosten.

Alternativ ist mittels der ersten Elektronik die Feststellbremssteuerfunktion bereitstellbar, während mittels einer separaten zweiten Elektronik die zweite Funktion bzw. eine Steuerung oder Regelung der zweiten Funktion bereitstellbar ist. Es sind somit zwei separate Elektroniken vorhanden, was den Vorteil hat, dass bei Ausfall einer Elektronik, d.h. bei Ausfall einer Funktion die zweite Elektronik und die zweite Funktion nicht zwangsläufig mit ausfällt. Bspw. ist die erste Elektronik der Betriebsbremsfunktion zugeordnet, während die zweite Elektronik der Feststellbremsfunktion zugeordnet ist. Somit fallen bei Ausfall einer dieser Elektroniken Betriebsbremsfunktion und Feststellbremsfunktion nicht zwangsläufig gleichzeitig aus.

In einer vorteilhaften Weiterbildung ist die Feststellbremssteuerfunktion redundant ausgebildet. Die Feststellbremssteuerfunktion ist somit nicht nur von der ersten Elektronik, sondern zusätzlich auch von der zweiten Elektronik bereitstellbar. Bei Ausfall einer dieser Elektroniken kann somit das Fahrzeug über die Feststellbremssteuerfunktion der jeweils anderen Elektronik noch sicher abgestellt werden.

Weitere bevorzugte Ausführungsformen der Erfindung ergeben sich aus den Unteransprüchen sowie aus den anhand der Zeichnung näher erläuterten Ausführungsbeispielen. In der Zeichnung zeigen:
- Fig. 1: ein Blockdiagramm zur Veranschaulichung einer Integration einer Feststellbremssteuerfunktion in eine elektronische und/oder elektropneumatische Einrichtung einer Bremsanlage gemäß einem Ausführungsbeispiel der Erfindung,
- Fig. 2: ein Blockdiagramm einer besonderen Ausgestaltung der Einrichtung der Bremsanlage gemäß Fig. 1 mit integriertem Magnetventil,
- Fig. 3: ein Blockdiagramm einer besonderen Ausgestaltung der Einrichtung der Bremsanlage gemäß Fig. 1 mit einer angeflanschten Ventileinheit,
- Fig. 4: ein Blockdiagramm einer besondere Ausgestaltung der Einrichtung der Bremsanlage gemäß Fig. 1 mit zwei angeflanschten Ventileinheiten,
- Fig. 5: ein Blockdiagramm einer besonderen Ausgestaltung der Einrichtung der Bremsanlage gemäß Fig. 1 als Luftaufbereitungseinrichtung mit einer angeflanschten Ventileinheit,
- Fig. 6: einen durch Hinzufügen der Feststellbremssteuerfunktion und Ventilen zu einem 3K-Modulator erweiterten 2K-Achsmodulator der Bremsanlage gemäß Fig. 1 in vereinfachter schematischer Darstellung,
- Fig. 7: eine Luftaufbereitungseinrichtung der Bremsanlage gemäß Fig. 1 mit integrierter Feststellbremssteuerfunktion und angeflanschter Ventileinheit in einer ersten Variante in vereinfachter schematischer Darstellung,
- Fig. 8: eine Luftaufbereitungseinrichtung der Bremsanlage gemäß Fig. 1 mit integrierter Feststellbremssteuerfunktion und angeflanschter Ventileinheit in einer zweiten Variante in vereinfachter schematischer Darstellung,
- Fig. 9: eine Luftaufbereitungseinrichtung der Bremsanlage gemäß Fig. 1 mit integrierter Feststellbremssteuerfunktion und angeflanschter Ventileinheit in einer dritten Variante in vereinfachter schematischer Darstellung,
- Fig. 10: eine Luftaufbereitungseinrichtung der Bremsanlage gemäß Fig. 1 mit integrierter Feststellbremssteuerfunktion und angeflanschter Ventileinheit in einer vierten Variante in vereinfachter schematischer Darstellung und
- Fig. 11: die Bremsanlage gemäß Fig. 1 mit der in ein Modul der Fahrdynamikregelung integrierten Feststellbremssteuerfunktion in vereinfachter schematischer Darstellung.

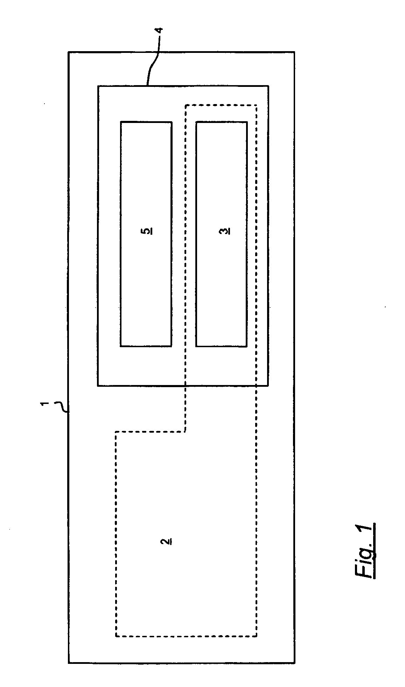

Fig. 1 zeigt ein Blockdiagramm einer Bremsanlage 1. Diese Bremsanlage 1 weist eine Feststellbremsfunktion 2 auf. Diese Feststellbremsfunktion 2 beinhaltet eine Feststellbremssteuerfunktion 3. Ferner weist die Bremsanlage 1 eine Einrichtung 4 auf. Diese Einrichtung 4 weist eine zweite Funktion 5 auf, welche sich von der Feststellbremsfunktion 2 unterscheidet. Erfingdungsgemäß ist die Feststellbremssteuerfunktion 3 zusammen mit der zweiten Funktion 5 in der Einrichtung 4 der Bremsanlage 1 angeordnet.

Die Einrichtung 4 mit der zweiten Funktion 5 ist hierbei eine elektronische und/oder elektropneumatische Einrichtung der Bremsanlage 1. Bspw. handelt es sich bei der Einrichtung 4 um eine Luftaufbereitungseinrichtung, einen Achsmodulator, ein Anhängersteuerventil, eine Steuerung eines elektronischen Bremssystems oder eine Fahrdynamikregelungseinrichtung.

Alternativ zu diesem Ausführungsbeispiel gemäß Fig. 1 kann die Einrichtung 4 mit der Feststellbremssteuerfunktion 3 und der zweiten Funktion 5 eine elektropneumatische Einrichtung des Fahrzeugs sein, wobei die zweite Funktion 5 nicht der Bremsanlage 1 zugeordnet ist. Bspw. handelt es sich bei der Einrichtung 4 in diesem Fall um eine Luftaufbereitungseinrichtung, welche nicht Komponenten der Bremsanlage 1, sondern bspw. eine Luftfederungseinrichtung mit Druckluft versorgt. Alternativ kann es sich bei der Einrichtung 4 selbst um eine Luftfederungseinrichtung handeln.

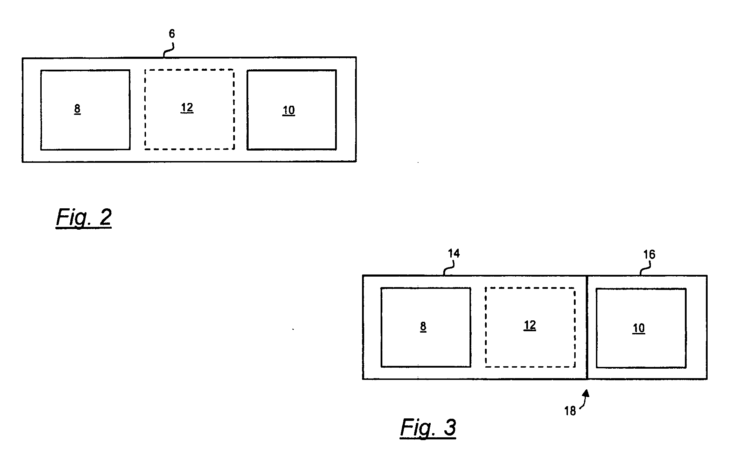

Fig. 2 zeigt ein Blockdiagramm einer Einrichtung 6, welche eine besondere Ausgestaltung der Einrichtung 4 von Fig. 1 ist und welche in der Bremsanlage 1 mit elektropneumatisch bereitstellbarer Feststellbremsfunktion 2 einsetzbar ist. In die Einrichtung 6 ist eine Steuereinrichtung 8 integriert. Von dieser Steuereinrichtung 8 ist wenigstens die Feststellbremssteuerfunktion 3 bereitstellbar. Darüber hinaus wird von dieser Steuereinrichtung 8 wenigstens ein Magnetventil 10 angesteuert, welches ebenfalls in die Einrichtung 6 integriert ist. Mittels dieses Magnetventils 10 ist ein Luftdruck zur Bereitstellung der Feststellbremsfunktion 2, d.h. zum Belüften und Entlüften von Federspeicherteilen von Federspeicherbremszylindern und ggf. zum Belüften und Entlüften von Membranteilen von Bremszylindern an einem Anhängefahrzeug nach Invertierung des ausgesteuerten Druckes in einem Anhängersteuerventil aussteuerbar. Ggf. weist die Einrichtung 6, insbesondere zur Bereitstellung der zweiten Funktion 5, wenigstens ein weiteres Ventil 12 auf. Bspw. handelt es sich bei der Einrichtung 6 um ein sog. Anhängersteuerventil bzw. um eine Anhängersteuerventileinrichtung, in welche dieses Ventil 12 integriert ist.

Fig. 3 zeigt ein Blockdiagramm einer besonderen Ausgestaltung der Einrichtung 4 von Fig. 1 als Einrichtung 14 mit einer an dieser Einrichtung 14 angeflanschten Ventileinheit 16. Bei der Einrichtung 14 handelt es sich bspw. um einen Achsmodulator, welcher die Steuereinrichtung 8 und das Ventil 12 aufweist. An die Einrichtung 14 ist eine Ventileinheit 16 angeflanscht, welche das Magnetventil 10 aufweist. Hierzu ist zwischen der Einrichtung 14 und der Ventileinheit 16 ein Flansch 18 als Verbindung vorgesehen. Dieser Flansch 18 weist elektrische und pneumatische Verbindungen zwischen der Einrichtung 14 und der Ventileinheit 16 auf. Das Magnetventil 10 in der Ventileinheit 16 wird über den Flansch 18 mit Druckluft versorgt. Ferner wird das Magnetventil 10 über diesen Flansch 18 von der Steuereinrichtung 8 elektrisch angesteuert. Ein mittels des Magnetventils 10 ausgesteuerter pneumatischer Druck wird zudem über den Flansch 18 und die Einrichtung 14 und weitere nicht dargestellte Druckluftleitungen Federspeicherteilen von Federspeicherbremszylindern zur Bereitstellung der Feststellbremsfunktion 2 zugeleitet. Die Ventileinheit 16 weist somit elektrische und pneumatische Verbindungen lediglich zu der Einrichtung 14 auf. Im Falle eines Defekts der Ventileinheit 16 ist somit unproblematisch ein Austausch dieser Ventileinheit 16 möglich, ohne aufwändig elektrische und pneumatische Leitungen entfernen zu müssen, da lediglich die Verbindung zwischen der Einrichtung 14 und der Ventileinheit 16 an dem Flansch 18 aufgetrennt werden muss.

Alternativ zu dieser Ausgestaltung der Einrichtung gemäß Fig. 3 kann das Ventil 10 auch analog zu der Ausgestaltung der Einrichtung gemäß Fig. 2 in die Einrichtung 14 integriert sein. In diesem Fall kann ein konventioneller 2K-Achsmodulator als Einrichtung 14 verwendet werden, der zu einem 1 K-Achsmodulator zur Aussteuerung eines pneumatischen Druckes zur Bereitstellung der Betriebsbremsfunktion mit zusätzlicher Aussteuerung eines pneumatischen Drucks zur Bereitstellung der Feststellbremsfunktion umgebildet ist.

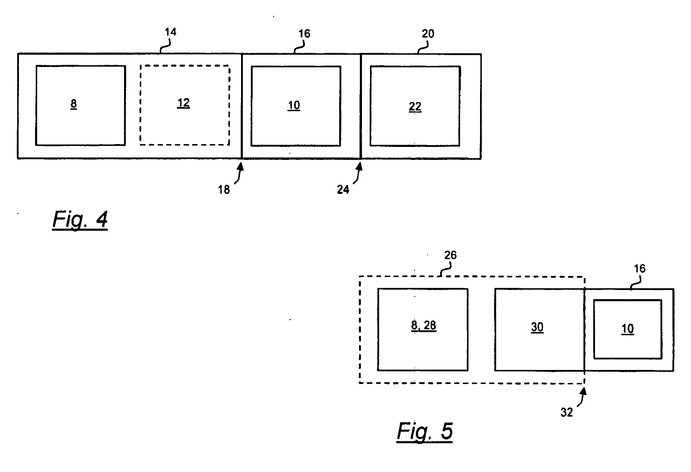

Fig. 4 zeigt die Einrichtung 14 von Fig. 3 mit der Steuereinrichtung 8 und dem Ventil 12 und zwei an dieser Einrichtung 14 befestigte Ventileinheiten. Wie bereits in der Ausgestaltung der Einrichtung gemäß Fig. 3 ist eine erste Ventileinheit, nämlich die Ventileinheit 16, über den Flansch 18 elektrisch und pneumatisch mit der Einrichtung 14 verbunden. Zusätzlich ist jedoch noch eine weitere Ventileinheit 20 mit wenigstens einem Magnetventil 22 über einen weiteren Flansch 24 mit der Ventileinheit 16 und hierüber mit der Einrichtung 14 verbunden. Es liegt somit ein modularer Aufbau vor, bei welchem prinzipiell beliebig viele Ventileinheiten 16, 20 in Reihe an die Einrichtung 14 angeflanscht sein können. Die Steuerung der Ventile 10, 22 erfolgt hierbei wiederum über die Steuereinrichtung 8. Die Ventileinheiten 16, 20 müssen neben Verbindungsanschlüssen am Flansch 18 bzw. 24 keine weiteren elektrischen oder pneumatischen Anschlüsse aufweisen. Alle elektrischen und pneumatischen Verbindungen der Ventileinheiten 16, 20 zu weiteren Komponenten der Bremsanlage erfolgen über die Einrichtung 14.

Alternativ können die Magnetventile 10 und 22 auch wieder in die Einrichtung 14 oder in eine gemeinsame Ventileinheit integriert sein. Die Steuereinrichtung 8 kann alternativ auch derart ausgebildet sein, dass sie als zweite Funktion lediglich die Steuerung des Ventils 12 übernimmt, wobei dieses Ventil 12 nicht in der Einrichtung 14 angeordnet ist. Das Ventil 12 kann in diesem Fall an die Einrichtung 14 angeflanscht und ggf. auch mit den Magnetventilen 10 und 22 in einer gemeinsamen Einrichtung zusammengefasst sein.

Fig. 5 zeigt ein Blockdiagramm einer Einrichtung 26, welche eine besondere Ausgestaltung der Einrichtung 4 als Luftaufbereitungseinrichtung ist. Die Steuereinrichtung 8, welche u.a. die Feststellbremssteuerfunktion 3 bereitstellt, ist in eine Lufttrocknungseinheit 28 integriert, welche Bestandteil der Luftaufbereitungseinrichtung 26 ist. Als weiterer Bestandteil der Luftaufbereitungseinrichtung 26 ist eine Mehrkreisschutzventileinheit 30 separat von der Lufttrocknungseinheit 28 angeordnet. An dieser Mehrkreisschutzventileinheit 30 ist die Ventileinheit 16 mit dem Ventil 10 befestigt. Elektrische und pneumatische Verbindungen zwischen der Mehrkreisschutzventileinheit 30 und der Ventileinheit 16 werden über einen Flansch 32 hergestellt. Sowohl Ventile in der Mehrkreisschutzventileinheit 30, als auch das Magnetventil 10 in der Ventileinheit 16 werden von der Steuereinrichtung 8 gesteuert.

Alternativ kann das Ventil 16 auch direkt in die Mehrkreisschutzventileinheit 30 integriert sein. Auch eine Integration in die Lufttrocknungseinheit 28 ist möglich. Darüber hinaus können auch die Lufttrocknungseinheit 28 und die Mehrkreisschutzventileinheit 30 zu einer Einheit zusammengefasst sein.

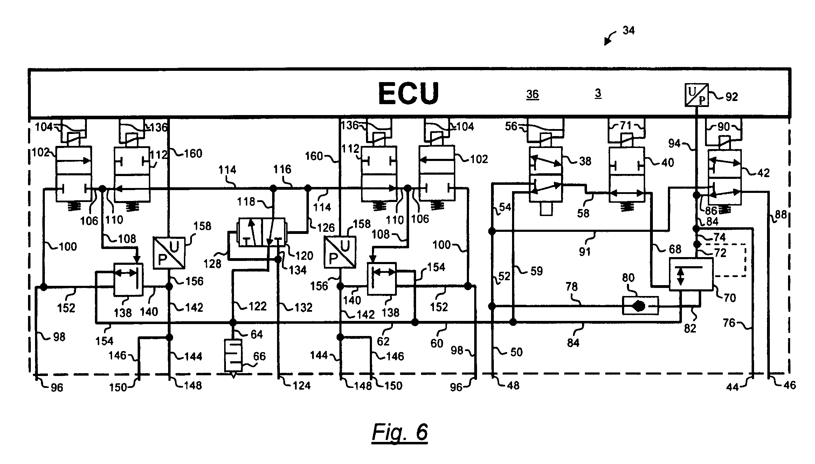

Fig. 6 zeigt einen Modulator 34 mit drei Kanälen, d.h. drei unterschiedlich aussteuerbaren pneumatischen Drücken. Zwei Kanäle sind hierbei die beiden Kanäle eines 2K-Achsmodulators, mittels derer Membranteile von Bremszylindern zur Bereitstellung einer Betriebsbremsfunktion belüftbar und wieder entlüftbar sind. Der dritte aussteuerbare pneumatische Druck dient zur Belüftung und Entlüftung von Federspeicherteilen von Bremszylindern zur Bereitstellung der Feststellbremsfunktion 2.

Der Modulator 34 kann somit als 3K-Modulator bezeichnet werden. Dieser 3K-Modulator 34 ist eine besondere Ausgestaltung der Einrichtung 4 von Fig. 1. Die Einrichtung 34 weist nämlich eine Steuereinrichtung 36 auf, welche sowohl zur Steuerung einer Betriebsbremsfunktion als auch zur Steuerung der Feststellbremsfunktion dient. D.h. die Feststellbremssteuerfunktion 3 ist mittels der Steuereinrichtung 36 ausführbar. Die Feststellbremssteuerfunktion 3 in der Steuereinrichtung 36 steuert nämlich Magnetventile 38, 40 und 42 an, mittels welcher elektropneumatisch Drücke zur Bereitstellung der Feststellbremsfunktion aussteuerbar und an Luftdruckausgängen 44 und 46 bereitstellbar sind.

Im Einzelnen gelangt Druckluft über einen Drucklufteingang 48, Druckluftleitungen 50, 52 und 54 an das Magnetventil 38, welches als 3/2 Wege-Magnetventil ausgebildet ist und welches vorteilhafterweise ein elektromagnetisch betätigbares Bistabilventil ist. Alternativ könnte ein federkraftbeaufschlagtes 3/2 Wege-Magnetventil verwendet werden, das stromlos durch die Federkraft in die Entlüftungsposition gebracht wird. Dieses 3/2 Wege-Magnetventil 38 ist über elektrische Leitungen 56 von der Steuereinrichtung 36 ansteuerbar und in zwei Schaltzuständen schaltbar, wobei es unabhängig von seinem jeweiligen Schaltzustand auch bei einem Ausfall der elektrischen Ansteuerung in diesem jeweiligen Schaltzustand verharrt.

Mittels des 3/2 Wege-Magnetventils 38 kann eine Druckluftleitung 58 somit in dem nicht dargestellten Schaltzustand dieses 3/2 Wege-Magnetventils 38 belüftet werden. Darüber hinaus kann diese Druckluftleitung 58 über dieses 3/2 Wege-Magnetventil 38 in dem dargestellten Schaltzustand dieses 3/2 Wege-Magnetventils 38 über Druckluftleitungen 59, 60, 62, 64 und eine Entlüftungsvorrichtung 66 entlüftet werden. Es kann somit ein pneumatischer Druck in der Druckluftleitung 58 erhöht oder erniedrigt werden. Dieser pneumatische Druck wird im unbestromten Zustand des Magnetventils 40 über eine Druckluftleitung 68 einer Relaisventileinheit 70 zugeführt. Dabei kann der in der Druckluftleitung 68 ausgesteuerte Luftdruck nach Schalten des Magnetventils 40 über elektrische Leitungen 71 in den bestromten Zustand auch gehalten werden.

Der ausgesteuerte pneumatische Druck in der Druckluftleitung 68 wird mittels der Relaisventileinheit 70 luftmengenverstärkt und über Druckluftleitungen 72, 74 und 76 an den Druckluftausgang 44 geleitet, von wo aus er Federspeicherteilen von Bremszylindern der Bremsanlage 1 eines Fahrzeugs bzw. Zugfahrzeugs bereitgestellt wird. Die Relaisventileinheit 70 bezieht hierbei Druckluft von dem Drucklufteingang 48 über die Druckluftleitung 50, eine Druckluftleitung 78, ein Rückschlagventil 80 und eine Druckluftleitung 82. Eine Entlüftung der Druckluftleitung 72 im Falle einer Erniedrigung des pneumatischen Drucks in der Druckluftleitung 68 findet über die Relaisventileinheit 70 und eine Druckluftleitung 84 sowie die bereits erwähnten Druckluftleitungen 60, 62, 64 und die Entlüftungseinrichtung 66 statt.

Im unbestromten Zustand des Magnetventils 42 gelangt die luftmengenverstärkte Druckluft von der Relaisventileinheit 70 über die Druckluftleitungen 72 und 74 sowie Druckluftleitungen 84 und 86, über das Magnetventil 42 und eine Druckluftleitung 88 auch an den Druckluftausgang 46, von wo aus diese Druckluft einem Anhängersteuerventil und von dort als invertierter Druck einem Anhängefahrzeug bereitgestellt werden kann.

Bei elektrischer Ansteuerung des Magnetventils 42 über elektrische Leitungen 90 ist alternativ der Druckluftausgang 46 über die Druckluftleitungen 50, 52, eine Druckluftleitung 91, das Magnetventil 42 und die Druckluftleitung 88 direkt mit dem Drucklufteingang 48 verbindbar. Diese Schaltstellung des Magnetventils 42 dient zum Testen, ob ein abgestellter Fahrzeugzug allein von den mittels der Feststellbremsfunktion betätigten Bremsen des Zugfahrzeugs gehalten werden kann.

Ein Drucksensor 92 ist zudem über eine Druckluftleitung 94 mit der Druckluftleitung 84 verbunden und misst somit den ausgesteuerten und mittels des Relaisventils 70 luftmengenverstärkten Luftdruck. Der ausgesteuerte Luftdruck kann somit von der Steuereinrichtung 36 überwacht werden. Durch regulierende Steuereingriffe an den Magnetventilen 38 und 40 kann somit ein pneumatischer Druck wenigstens an dem Luftdruckausgang 44 und im Falle des sich im unbestromten Schaltzustand befindlichen Magnetventils 42 auch an dem Luftdruckausgang 46 eingeregelt werden.

Weitere Komponenten der Einrichtung 34 dienen zur Bereitstellung der Betriebsbremsfunktion mittels eines Achsmodulators auf bekannte Weise. Lediglich die Steuereinrichtung 36 steuert nicht nur die Betriebsbremsfunktion, sondern stellt auch die Feststellbremssteuerfunktion 3 bereit. Darüber hinaus findet die Entlüf tung sowohl für die Betriebsbremsfunktion als auch für die Feststellbremsfunktion über die gemeinsame Entlüftungsvorrichtung 66 statt. Alle Ventile sind zudem in ein gemeinsames Gehäuse integriert. Der Aufbau zur Bereitstellung der Betriebsbremsfunktion soll im Folgenden dargestellt werden.

Ein Vorratsluftdruck gelangt über Drucklufteingänge 96 und Druckluftleitungen 98 und 100 an Magnetventile 102, welche über elektrische Leitungen 104 von der Steuereinrichtung 36 ansteuerbar und schaltbar sind. Im bestromten Zustand belüften diese Magnetventile 102 Druckluftleitungen 106 und 108. Ein Entlüften der Druckluftleitungen 108 ist über Druckluftleitungen 110, Magnetventile 112, Druckluftleitungen 114, 116 und 118 möglich. Über ein pneumatisch schaltbares Ventil 120, eine Druckluftleitung 122 und die Druckluftleitung 64 kann Druckluft über die Entlüftungsvorrichtung 66 entweichen. Ein Entweichen von Druckluft ist hierbei, bspw. im Falle eines Stromausfalls, nicht unter einen von einer Bremspedaleinrichtung mechanisch ausgesteuerten Redundanzdruck möglich, welcher der Einrichtung 34 über einen Drucklufteingang 124 bereitgestellt wird. Das Ventil 120 ist nämlich mit Druckluft über Druckluftleitungen 126 und 128 derart schaltbar, dass die Druckluftleitung 118 nur so lange über die Entlüftungsvorrichtung 66 entlüftet wird, wie der pneumatische Druck in der Druckluftleitung 118 den pneumatischen Druck am Drucklufteingang 124 übersteigt.

Im umgekehrten Fall, d.h. bei einem pneumatischen Druck am Drucklufteingang 124, welcher den pneumatischen Druck in der Druckluftleitung 118 übersteigt, gelangt Druckluft vom Drucklufteingang 124 über Druckluftleitungen 132 und 134 und das Ventil 120 in die Druckluftleitung 118. Im Falle eines Stromausfalls kann somit von der Druckluftleitung 118 über die Druckluftleitungen 116 und 114 und über die unbestromten Ventile 112 und Druckluftleitungen 110 ein Redundanzdruck den Druckluftleitungen 108 bereitgestellt werden. Anderenfalls sind die Magnetventile 112 über elektrische Leitungen 136 bestrombar, wodurch ein Entlüften der Druckluftleitungen 108 vermieden wird.

Relaisventile 138 geben den ausgesteuerten Luftdruck der Druckluftleitungen 108 über Druckluftleitungen 140, 142, 144 und 146 an Druckluftausgänge 148 und 150. Diese Druckluftausgänge 148 und 150 sind mit Bremszylindern zur Bereitstellung der Betriebsbremsfunktion des Fahrzeugs verbunden.

Die Relaisventile 138 werden mit Druckluft von den Drucklufteingängen 96 über die Druckluftleitungen 98 und Druckluftleitungen 152 gespeist. Eine Entlüftung der Druckluftleitungen 140 im Falle eines Absinkens des Luftdrucks in den Druckluftleitungen 108 findet über die Relaisventile 138, Druckluftleitungen 154, 62 und 64 über die Entlüftungsvorrichtung 66 statt.

Zu Kontrollzwecken und zur Einregelung eines auszusteuernden pneumatischen Drucks an den Druckluftausgängen 148 und 150 sind die Druckluftleitungen 140 über Druckluftleitungen 156 mit Drucksensoren 158 pneumatisch verbunden. Elektrische Leitungen 160 verbinden die Drucksensoren 158 mit der Steuereinrichtung 36. Somit können mittels der Drucksensoren 158 sensierte Drücke von der Steuereinrichtung 36 interpretiert und verarbeitet werden.

Die Drucksensoren 158 können alternativ analog zu der Anordnung des Drucksensors 92 auch in der Steuereinrichtung 36 angeordnet sein. Auch eine Anordnung des Drucksensors 92 außerhalb der Steuereinrichtung 36 ist möglich. Die gemeinsame Steuereinrichtung 36 kann alternativ auch alleine die Einrichtung 34 bilden. Auch weitere in Fig. 6 gezeigte Komponenten können an diese Einrichtung 34 in einer oder in mehreren Einheiten angeflanscht sein. Auch eine separate Anordnung bzw. ein Anflanschen der Relaisventile 138 und/oder des Relaisventils 70 ist möglich.

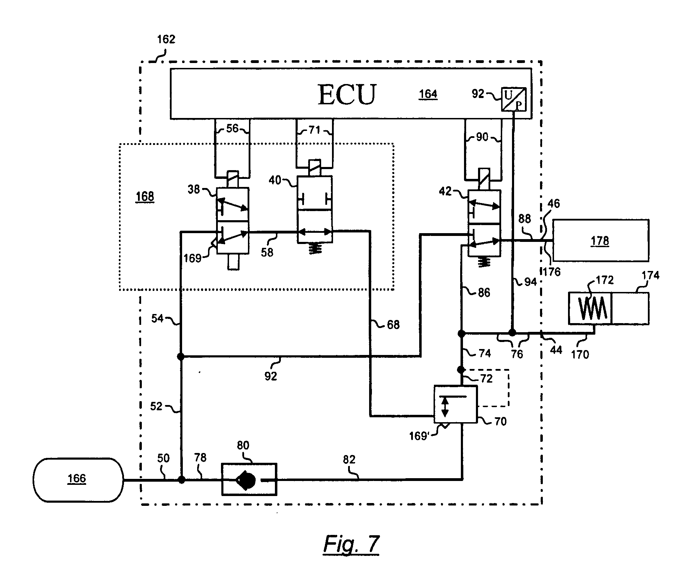

Fig. 7 zeigt eine besondere Ausgestaltung der Einrichtung 4 gemäß Fig. 1 als Luftaufbereitungseinrichtung 162, in welche eine Steuereinrichtung 164 integriert ist, in einer ersten Variante. Diese Steuereinrichtung 164 und somit die Luftaufbereitungseinrichtung 162 stellt die Feststellbremssteuerfunktion 3 bereit. Darüber hinaus stellt die Luftaufbereitungseinrichtung 162 die zweite Funktion 5 bereit, welche sich von der Feststellbremsfunktion 2 unterscheidet. Diese zweite Funktion 5 ist das Aufbereiten von Druckluft, welche mehreren nicht dargestellten Druckluftvorratsbehältern und/oder einem Druckluftvorratsbehälter 166 und in der Druckluftleitung 50 bereitgestellt wird. Die Luftaufbereitungseinrichtung 162 bereitet hierbei Druckluft auf, indem sie diese Druckluft bspw. trocknet und/oder eine Mehrkreisschutzventileinheit zum Schutz mehrerer Druckluftkreise vor einem plötzlichen Druckverlust umfasst. Aus den Druckluftvorratsbehältern werden bspw. Komponenten der Bremsanlage 1 zur Bereitstellung einer Betriebsbremsfunktion gespeist. Alternativ oder zusätzlich wird die von der Luftaufbereitungseinrichtung 162 bereitgestellte Druckluft einem Luftfederungssystem bereitgestellt.

An die Luftaufbereitungseinrichtung 162 ist eine Ventileinheit 168 mit den Magnetventilen 38 und 40 des Modulators 34 gemäß Fig. 6 angeflanscht. Über diesen Flansch werden die Druckluftleitungen 54 und 68 sowie die elektrischen Leitungen 56 und 71 zur Steuerung der Magnetventile 38 und 40 geführt. Es entfallen somit sowohl pneumatische zwischen der Luftaufbereitungseinrichtung 162 und der Ventileinheit 168. Dies spart Kosten. Gleichzeitig ermöglicht diese Bauweise einen Austausch der Ventileinheit 168 im Falle eines Defekts, ohne dass hierfür aufwändig Druckluftleitungen zu Bremszylindern bzw. zu einem Anhängersteuerventil demontiert werden müssten.

Die Entlüftung der Druckluftleitung 58 erfolgt über einen Entlüftungsausgang 169 des 3/2 Wege-Magnetventils 38. Druckluft wird hierbei aus einem Gehäuse der Ventileinheit 168 herausgeführt und an die Atmosphäre abgegeben. Alternativ kann die Druckluft auch von dem Entlüftungsausgang 169 über den Flansch zu der Luftaufbereitungseinrichtung 162 geführt und von dort ggf. gemeinsam mit Druckluft von einem Entlüftungsausgang 169' des Relaisventils 70 an die Atmosphäre abgegeben werden.

Der Druckluftausgang 44 ist über eine Druckluftleitung 170 mit einem Federspeicherteil 172 eines kombinierten Membran-/Federspeicherbremszylinders 174 verbunden. Eine Druckluftleitung 176 verbindet den Druckluftausgang 46 mit einem Anhängersteuerventil 178. Über dieses Anhängersteuerventil 178 ist einem evtl. an ein Zugfahrzeug mit dieser Bremsanlage 1 angekoppeltem Anhängefahrzeug Druckluft zum Betätigen von Bremszylindern bereitstellbar.

Die weitere Funktionsweise der in Fig. 7 dargestellten Komponenten entspricht der in Fig. 6 dargestellten und bereits beschriebenen Funktionsweise zur Bereitstellung der Feststellbremsfunktion. Dabei bezeichnen gleiche Bezugsziffern gleiche Bauteile.

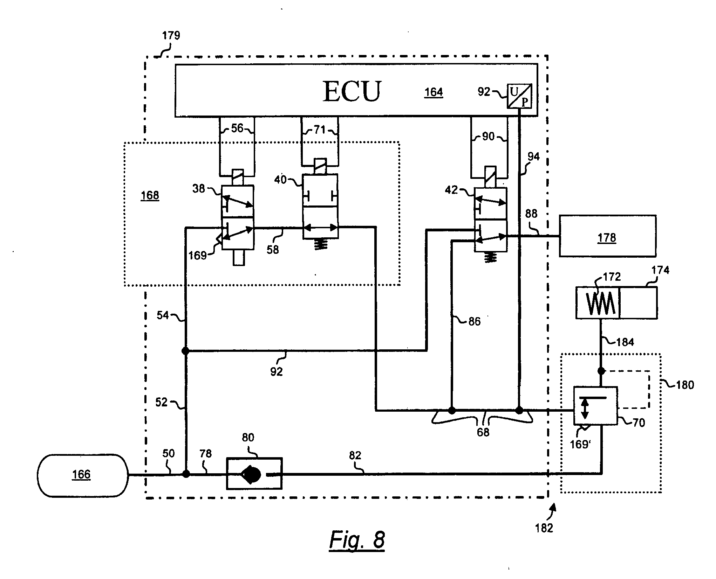

Fig. 8 zeigt eine zweite Variante der Ausgestaltung der Einrichtung 4 als Luftauf breitungseinrichtung 179, welche im Wesentlichen der Luftaufbereitungseinrichtung gemäß Fig. 7 gleicht. Wieder bezeichnen gleiche Bezugsziffern gleiche Bauteile. Im Unterschied zur Luftaufbereitungseinrichtung 162 gemäß Fig. 7 ist das Relaisventil 70 jedoch nicht in die Luftaufbereitungseinrichtung 179 integriert, sondern an diese Luftaufbereitungseinrichtung 179 in einem Gehäuse 180 angeflanscht. D.h. die Druckluftleitungen 68 und 82 werden über einen Flansch 182 durch das Gehäuse 180 zur Relaisventileinheit 70 geführt. Das Gehäuse 180 weist somit zwei Drucklufteingänge im Bereich des Flansches 182 auf. Darüber hinaus weist das Gehäuse 180 einen Druckluftausgang auf, über welchen eine Druckluftleitung 184 das Relaisventil 70 mit dem Federspeicherbremszylinder 174 verbindet. Durch einen weiteren nicht dargestellten Ausgang am Gehäuse 180 kann das Relaisventil 70 die Druckluftleitung 184 über den Druckluftausgang 169' des Relaisventils 70 entlüften. Alternativ hierzu kann ein Entlüftungsausgang an der Luftaufbereitungseinrichtung 179 vorgesehen sein, über welchen das Relaisventil 70 und/oder das Magnetventil 38 entlüftet werden kann. Hierzu ist wenigstens eine pneumatische Verbindung über den jeweiligen Flansch von dem Gehäuse 180 bzw. von der Ventileinheit 168 zur Luftaufbereitungseinrichtung 179 geführt.

Aufgrund der Anordnung des Relaisventils 70 außerhalb der Luftaufbereitungseinrichtung 179 misst der Drucksensor 92 nicht den mittels des Relaisventils 70 luftmengenverstärkten Luftdruck sondern den Luftdruck in der Druckluftleitung 68. Hierzu ist die Druckluftleitung 94 mit dieser Druckluftleitung 68 verbunden. Auch das Magnetventil 42 ist über die Druckluftleitung 86 in diesem Ausführungsbeispiel mit der Druckluftleitung 68 verbunden und speist somit im Falle des unbestromten Magnetventils 42 die Druckluftleitung 88 bzw. schließlich das Anhängersteuerventil 178 mit Druckluft, welche nicht mittels des Relaisventils 70 luftmengenverstärkt wurde. Diese Beschaltung ist möglich, da zur Ansteuerung des Anhängersteuerventils 178 zur Betätigung von Bremsen des Anhängefahrzeugs nicht so große Luftmengen benötigt werden wie zum Belüften von Federspeicherteilen von Federspeicherbremszylindern an einem Zugfahrzeug. Zudem ist in bestromter Schaltstellung des Magnetventils 42 zum Testen einer Feststellbremswirkung des Zugfahrzeugs bei unterdrückter Feststellbremsfunktion am Anhängefahrzeug die Druckluftleitung 88 direkt, d.h. ohne Zwischenschaltung der Magnetventile 38 und 40, mit der Druckluftleitung 50 verbindbar.

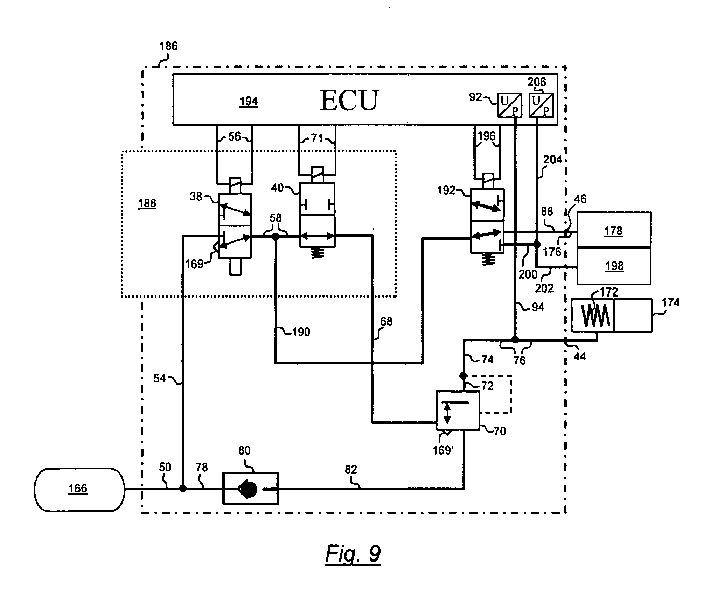

Fig. 9 zeigt eine dritte Variante der Ausgestaltung der Einrichtung 4 als Luftauf bereitungseinrichtung 186, welche im Wesentlichen der Luftaufbereitungseinrichtung 162 von Fig. 7 gleicht. Wiederum bezeichnen gleiche Bezugsziffern gleiche Bauteile. Angeflanscht an diese Luftaufbereitungseinrichtung 186 ist jedoch nun eine Ventileinheit 188, welche verglichen mit der Ventileinheit 168 von Fig. 7 über eine zusätzliche pneumatische Verbindung zur Luftaufbereitungseinrichtung 186 verfügt. Diese zusätzliche Verbindung wird über eine Druckluftleitung 190 hergestellt, welche die Druckluftleitung 58 zwischen den Magnetventilen 38 und 40 mit einem Magnetventil 192 verbindet. Dieses Magnetventil 192 ist von einer Steuereinrichtung 194 über elektrische Leitungen 196 steuerbar. Die Steuereinrichtung 194 stellt wie schon die Steuereinrichtung 164 in Fig. 7 die Feststellbremssteuerfunktion 3 bereit und steuert auch die Magnetventile 38 und 40.

Im unbestromten Zustand des Magnetventils 192 wird das Anhängersteuerventil 178 mit dem pneumatischen Druck beaufschlagt, welcher auch in der Druckluftleitung 58 vorliegt. Das Magnetventil 38 verharrt auch bei einem Stromausfall in seiner aktuellen Schaltstellung. Demzufolge führt auch ein Stromausfall nicht dazu, dass das Magnetventil 38 seine Schaltstellung ändert, Druckluftleitungen entlüftet und damit das Fahrzeug einbremst.

Statt des Anhängersteuerventils 178 kann alternativ das Anhängersteuerventil 198 angeschlossen werden, das über das Magnetventil 192 mit der Druckluftleitung 190 verbindbar ist. Diese Verbindung findet hierbei über Druckluftleitungen 200 und 202 statt. Eine Druckluftleitung 204 verbindet überdies die Druckluftleitung 200 mit einem Drucksensor 206, mittels dessen von der Steuereinrichtung 194 ein Ist-Druck in der Druckluftleitung 200 ermittelbar und durch entsprechende Ansteuerung der Ventile 38 und 192 zur Angleichung an einen Soll-Druck einregelbar ist.

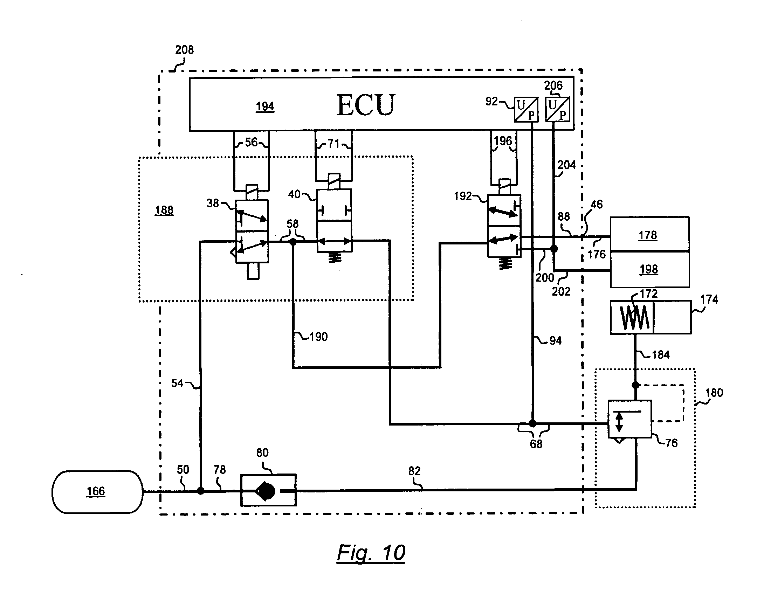

Fig. 10 zeigt eine vierte Variante der Ausgestaltung der Einrichtung 4 als Luftauf bereitungseinrichtung 208 mit integrierter Feststellbremssteuerfunktion 3, welche die dritte und die vierte Variante gemäß der Fig. 8 und 9 miteinander kombiniert. Gleiche Bezugsziffern bezeichnen wiederum gleiche Bauteile.

Die Feststellbremssteuerfunktion 3 wird durch die Steuereinrichtung 194 bereitgestellt und ist somit in die Luftaufbereitungseinrichtung 208 integriert. Sowohl die Ventileinheit 188 als auch das Gehäuse 180 mit dem Relaisventil 76 sind an diese Luftaufbereitungseinrichtung 208 angeflanscht.

Alternativ zu dieser vierten Variante können die Ventileinheit 188 und das Relaisventil 76 auch in einem gemeinsamen Gehäuse an die Luftaufbereitungseinrichtung 208 angeflanscht sein. Auch das Rückschlagventil 80 kann in dieses gemeinsame Gehäuse oder auch in das Gehäuse 180 gemäß der in den Fig. 8 und 10 gezeigten Varianten integriert sein. Ggf. braucht anstelle der Druckluftleitungen 54 und 82 lediglich die Druckluftleitung 50 über den Flansch zur Luftauf bereitungseinrichtung 179, 208 geführt werden. Auch die Druckluftleitung 68 muss ggf. nicht aus einem gemeinsamen Gehäuse für die Magnetventile 38, 40 und das Relaisventil 76 herausgeführt werden. Dann ist allenfalls die Druckluftleitung 94 zum Drucksensor 92 aus diesem gemeinsamen Gehäuse herausgeführt. Alternativ kann jedoch auch der Drucksensor 92 mit angeflanscht werden und lediglich über eine elektrische Leitung über den Flansch mit der Steuereinrichtung 194 verbunden sein.

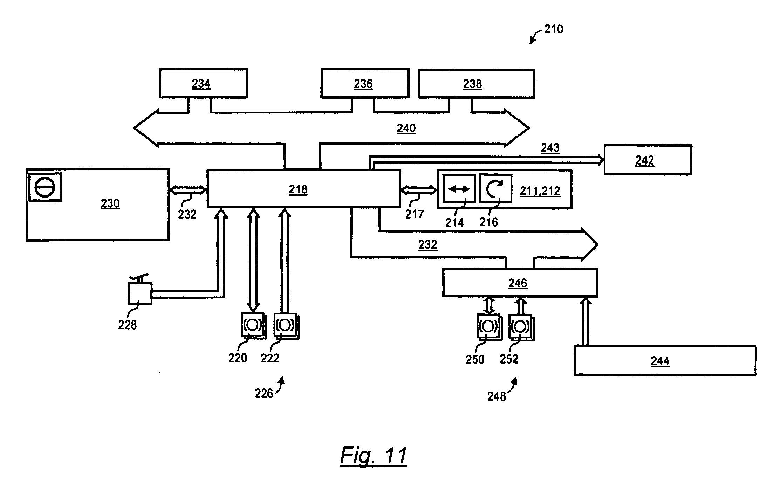

Fig. 11 zeigt eine Ausgestaltung der Einrichtung 4 gemäß Fig. 1 als Fahrdynamikregelungseinrichtung 210 mit integrierter Feststellbremssteuerfunktion 3 (vgl. Fig. 1). Die zweite Funktion 5 ist eine Fahrdynamikregelung, welche zusammen mit der Steuerung der Feststellbremsfunktion 2, d.h. der Feststellbremssteuerfunktion 3, von wenigstens einer Steuer- und Regelungseinrichtung in einem Modul 211 bereitstellbar ist. Dieses Modul 211 ist in einem Feststellbremsmodulator 212 angeordnet.

Für die zweite Funktion 5 in Form der Fahrdynamikregelung werden Sensordaten eines Beschleunigungssensors 214 und eines Gierratensensors 216 verarbeitet. Diese beiden Sensoren 214 und 216 sind in die Steuereinrichtung zur Bereitstellung der Feststellbremssteuerfunktion 3, d.h. in das Modul 211 der Fahrdynamikregelung integriert. Die Fahrdynamikregelung ist hierbei im Falle eines bestimmungsgemäß funktionierenden elektronischen Bremssystems unabhängig von der Feststellbremsfunktion 2. D.h. die Sensorik der Fahrdynamikregelung, insbesondere die Sensoren 214 und 216, ist zusammen mit der Steuerung der Fahrdynamikregelung lediglich in ein gemeinsames Gehäuse zusammen mit der Steuerung der Feststellbremsfunktion 2 mittels der Feststellbremssteuerfunktion 3 integriert. Hierdurch wird eine Komponente der Bremsanlage 1 eingespart, was Kosten dieser Bremsanlage 1 senkt. Für Bremseingriffe verwendet die Fahrdynamikregelung nämlich die von der Bremsanlage 1 bereitgestellte Betriebsbremsfunktion. Hierfür gibt es eine CAN-Datenverbindung 217 zwischen dem Feststellbremsmodulator 212 bzw. dem Modul 211 mit einer Elektronik 218 des elektronischen Bremssystems.

Diese Elektronik 218 kommuniziert direkt mit weiteren Sensoren 220 und 222, welche an einer Vorderachse 226 eines die Bremsanlage 1 aufweisenden Fahrzeugs angeordnet sind. Bei diesen Sensoren 220 und 222 handelt es sich um Drehzahlsensoren. Darüber hinaus werden Signale eines Bremswertsignalgebers 228 von der Elektronik des elektronischen Bremssystems empfangen. Ein Lenkradwinkelsensor 230 kommuniziert über einen Datenbus 232 des elektronischen Bremssystems ebenfalls mit der Elektronik 218. Somit können Signale des Lenkradwinkelsensors und des Bremswertsignalgebers 228 zur Berechnung zu erwartender Sensorwerte herangezogen und diese Sensorwerte mit den tatsächlichen Messwerten der Sensoren 214, 216, 220 und 222 herangezogen werden. Abweichungen lassen hierbei auf kritische Fahrzustände schließen, welche auf einem Display 234 angezeigt werden können und einen Eingriff in die Steuerung eines Motors 236 und eines Retarders 238 erforderlich machen können. Eine Kommunikation für derartige Anzeigen bzw. Eingriffe findet über einen Fahrzeugdatenbus (CAN) 240 statt.

Auch ein Anhängefahrzeug 242 kann ggf. von der Elektronik 218 über eine CAN-Datenverbindung 243 angesteuert werden. Der Achsmodulator 246 befindet sich hierbei an einer Hinterachse 248 des Fahrzeugs. An Rädern dieser Hinterachse 246 sind Drehzahlsensoren 250 und 252 angeordnet. Diese Sensoren 250 und 252 senden Signale an den Achsmodulator 246, welche über den Datenbus 232 ebenfalls der Elektronik 218 des elektronischen Bremssystems zugeführt werden. Die Elektronik zur Fahrdynamikregelung im Modul 211 erhält alle Sensorsignale und wertet diese zum Zwecke der Stabilitätskontrolle des Fahrzeugs über vorzunehmende Eingriffe an Bremsen, an dem Motor 236 und an dem Retarder 238 aus. Alternativ kann diese Auswertung auch zum Teil von der Elektronik 218 des elektronischen Bremssystems vorgenommen werden.

Im Falle eines Ausfalls der Elektronik 218 des elektronischen Bremssystems ist die Elektronik der Fahrdynamikregelung in dem Feststellbremsmodulator 212 in der Lage, mittels der Feststellbremsfunktion 2 Räder, insbesondere der Hinterachse 248, des Fahrzeugs einzubremsen. Hierdurch erhöht sich die Sicherheit, da ein automatisches Einbremsen des Fahrzeugs in Erwiderung auf ermittelte kritische Fahrzustände dieses Fahrzeugs auch bei einem Ausfall der Elektronik 218 noch möglich ist. Ggf. können dann zwar nicht mehr Sensorwerte aller Sensoren berücksichtigt werden. Jedoch liegen immerhin noch die wichtigen Sensorwerte der Sensoren 214 und 216 vor, anhand derer kritische Fahrzustände erkannt werden können.

Die Unterbringung der Sensoren 214 und 216 in dem Modul 211 im Feststellbremsmodulator 212 ist zudem von Vorteil, da der Feststellbremsmodulator 212 gewöhnlich an einer zentralen Stelle in der Nähe der Hinterachse 248 des Fahrzeugs angeordnet ist, welche zudem optimal zur Messung mittels des Beschleunigungssensors 214 und des Gierratensensor 216 geeignet ist. Platz ist an dieser Stelle knapp, so dass diese Unterbringung der Sensoren 214 und 216 nicht nur ein Gehäuse in der Bremsanlage 1 einspart, sondern auch vorteilhaft mit dem knapp bemessenen Platz an einer bevorzugten Stelle an einem Fahrzeugrahmen des Fahrzeugs, an welchem die Bremsanlage 1 verbaut ist, umgeht.

Insgesamt stellt die Erfindung eine Bremsanlage mit Feststellbremsfunktion 2 bereit, welche durch die Integration der Feststellbremssteuerfunktion 3, welche das Feststellen steuert, und der zweiten und von der Feststellbremsfunktion 2 abweichenden Funktion 5 in eine gemeinsame Einrichtung 4 verglichen mit bekannten Bremsanlagen mit Feststellbremsfunktion kostengünstiger herstellbar ist und weniger Platz, insbesondere am Fahrzeugrahmen, beansprucht.

Alle in der Figurenbeschreibung, der Beschreibungseinleitung und in den Ansprüchen genannten Merkmale der Erfindung sind sowohl einzeln als auch in beliebiger Kombination miteinander einsetzbar. Die Erfindung ist somit nicht auf die beschriebenen bzw. beanspruchten Merkmalskombinationen beschränkt. Vielmehr sind alle Kombinationen von Einzelmerkmalen als offenbart zu betrachten.

## Patentansprüche

1. Bremsanlage für ein Fahrzeug, wobei diese Bremsanlage (1) eine Feststellbremsfunktion (2) zum Feststellen des Fahrzeugs aufweist, wobei diese Feststellbremsfunktion (2) eine Feststellbremssteuerfunktion (3) zur elektronischen Steuerung des Feststellens beinhaltet und wobei eine elektronische und/oder elektropneumatische Einrichtung (4) der Bremsanlage (1), insbesondere eine Luftaufbereitungseinrichtung, ein Achsmodulator, ein Anhängersteuerventil, eine Steuereinrichtung eines elektronischen Bremssystems oder eine Fahrdynamikregelungseinrichtung, und/oder eine elektropneumatische Einrichtung des Fahrzeugs, insbesondere eine Luftaufbereitungseinrichtung oder eine Luftfederungseinrichtung, eine zweite Funktion (5) aufweist, welche sich von der Feststellbremsfunktion (2) unterscheidet, **dadurch gekennzeichnet, dass** diese Einrichtung (4) zusätzlich zu der zweiten Funktion (5) die Feststellbremssteuerfunktion (3) aufweist.

2. Bremsanlage nach Anspruch 1, **dadurch gekennzeichnet, dass** die Feststellbremsfunktion (2) elektropneumatisch bereitstellbar ist, wobei ein pneumatischer Druck zum Belüften und Entlüften von Federspeicherteilen (172) von Federspeicherbremszylindern (174) mittels wenigstens eines Magnetventils (38, 40) elektropneumatisch aussteuerbar ist und wobei dieses Magnetventil (38, 40) in die Einrichtung (4, 6, 34, 211) integriert ist.

3. Bremsanlage nach Anspruch 1, **dadurch gekennzeichnet, dass** die Feststellbremsfunktion (2) elektropneumatisch bereitstellbar ist, wobei ein pneumatischer Druck zum Belüften und Entlüften von Federspeicherteilen (172) von Federspeicherbremszylindern (174) mittels wenigstens eines Magnetventils (10, 22, 38, 40) elektropneumatisch aussteuerbar ist und wobei dieses Magnetventil (10, 22, 38, 40) in wenigstens eine Ventileinheit (16, 20, 168, 188) integriert ist, welche über einen Flansch (18, 24, 32) an der Einrichtung (4, 14, 26, 162, 179, 186, 208) oder an einer weiteren an dieser Einrichtung (14) angeflanschten Ventileinheit (16) befestigt ist, wobei dieser Flansch (18, 24, 32) elektrische und pneumatische Verbindungen zwischen der Einrichtung (4, 14, 26, 162, 179, 186, 208) und der Ventileinheit (16, 168, 188) bzw. zwischen der weiteren Ventileinheit (20) und der Ventileinheit (16) aufweist.

4. Bremsanlage nach Anspruch 3, **dadurch gekennzeichnet, dass** das Magnetventil (10, 22, 38, 40) über die Einrichtung (4, 14, 26, 162, 179, 186, 208) mit einem Luftdruckvorrat (166) und über diese Einrichtung (4, 14, 26, 162, 179, 186, 208) mit den Federspeicherteifen (172) der Federspeicherbremszylinder (174) pneumatisch verbindbar ist.

5. Bremsanlage nach Anspruch 3 oder 4, **dadurch gekennzeichnet, dass** die Einrichtung (4, 26) mehrere Einheiten (28, 30) umfasst, wobei die Ventileinheit (16) an einer dieser Einheiten (30) befestigt ist, wobei insbesondere die Einrichtung (26) eine Luftaufbereitungseinrichtung und die Einheiten (28, 30) eine Lufttrocknungseinheit (28) und/oder eine Mehrkreisschutzventileinheit (30) dieser Luftaufbereitungseinrichtung (26) sind.

6. Bremsanlage nach einem der Ansprüche 2 bis 5, **gekennzeichnet durch** wenigstens ein Relaisventil (70), über welches das Magnetventil (38, 40) mit den Federspeicherteilen (172) der Bremszylinder (174) pneumatisch verbindbar ist, wobei dieses Relaisventil (70) in der Einrichtung (4, 34, 162, 186) angeordnet ist.

7. Bremsanlage nach einem der Ansprüche 2 bis 5, **gekennzeichnet durch** wenigstens ein Relaisventil (70), über welches das Magnetventil (38, 40) mit den Federspeicherteilen (172) der Bremszylinder (174) pneumatisch verbindbar ist, wobei dieses Relaisventil (70) an der Einrichtung (4, 179, 208) bzw. in der an dieser Einrichtung (4, 179, 208) angeflanschten Ventileinheit (168, 188) angeordnet ist.

8. Bremsanlage nach einem der vorherigen Ansprüche, **dadurch gekennzeichnet, dass** die Einrichtung (4, 6, 14, 26, 162, 179, 186, 208) eine Luftaufbereitungseinrichtung ist, mittels welcher der Bremsanlage (1) und/oder einer anderen Einrichtung des Fahrzeugs, insbesondere einer Luftfederungseinrichtung, Druckluft bereitstellbar ist.

9. Bremsanlage nach einem der Ansprüche 1 bis 7, **dadurch gekennzeichnet, dass** die Einrichtung (4, 6, 14) ein Anhängersteuerventil ist, mittels welchem einem an das Fahrzeug angehängten Anhängefahrzeug Druckluft für eine Betriebsbremsfunktion des Anhängefahrzeugs bereitstellbar ist.

10. Bremsanlage nach einem der Ansprüche 1 bis 7, **dadurch gekennzeichnet, dass** die Einrichtung (4, 6, 14) eine Luftfederungseinrichtung ist, wobei diese Luftfederungseinrichtung (4, 6, 14) wenigstens ein Ventil (12) aufweist, mittels dessen ein pneumatischer Druck aussteuerbar und zum Anheben oder Absenken des Fahrzeugs und/oder ggf. eines Anhängers/Aufliegers oder Teilen des Fahrzeugs bzw. Anhängers/Aufliegers bereitstellbar ist.

11. Bremsanlage nach Anspruch 2, **dadurch gekennzeichnet, dass** die Einrichtung (4, 6, 14, 34) ein Achsmodulator mit wenigstens zwei Kanälen ist, wobei das Magnetventil (10, 22, 38, 40) einem ersten Kanal zugeordnet ist, wobei wenigstens ein zweites Ventil (12, 102, 112) wenigstens einem zweiten Kanal zugeordnet ist und wobei mittels dieses zweiten Ventils (12, 102, 112) ein zweiter pneumatischer Druck zum Belüften und Entlüften von Membranteilen von Bremszylindern für eine Betriebsbremsfunktion aussteuerbar ist.

12. Bremsanlage nach einem der Ansprüche 2 bis 11, **dadurch gekennzeichnet, dass** wenigstens ein Relaisventil (70) in die Einrichtung (4, 34, 162, 186) integriert ist oder an die Einrichtung (4, 179, 208) angeflanscht ist, wobei ein bzw. das Magnetventil (10, 22, 38, 40) über dieses Relaisventil (70) pneumatisch mit den Federspeicherteilen (172) der Bremszylinder (174) verbindbar ist.

13. Bremsanlage nach Anspruch 1, **dadurch gekennzeichnet, dass** die Einrichtung (4) ein Zentralmodul eines elektronischen Betriebsbremssystems ist und die zweite Funktion (5) eine zentrale Steuerfunktion dieses elektronischen Betriebsbremssystems ist.

14. Bremsanlage nach Anspruch 1, **dadurch gekennzeichnet, dass** die Einrichtung (4, 6, 14) ein Modul (211) einer Fahrdynamikregelung ist und die zweite Funktion (5) eine Regelung der Fahrdynamik des Fahrzeugs und/oder eines ggf. vorhandenen Anhängefahrzeugs ist.

15. Bremsanlage nach Anspruch 14, **dadurch gekennzeichnet, dass** das Modul (211) der Fahrdynamikregelung (5) wenigstens einen Sensor (214, 216), insbesondere Beschleunigungssensor (214) und/oder Gierratensensor (216), aufweist, durch welchen Daten eines Fahrzustandes sensierbar und der Fahrdynamikregelung (5) bereitstellbar sind.

16. Bremsanlage nach einem der Ansprüche 14 oder 15, **dadurch gekennzeichnet, dass** im Falle eines bestimmungsgemäß funktionierenden elektronischen Bremssystems von der Fahrdynamikregelung (5) gezielt Bremsen an einzelnen Rädern des Fahrzeugs direkt ansteuerbar oder über dieses elektronische Bremssystem mittels einer Betriebsbremsfunktion betätigbar sind und im Falle des ausgefallenen elektronischen Bremssystems von der Fahrdynamikregelung (5) die Bremsen an Rädern, insbesondere an einer Hinterachse (248), des Fahrzeugs mittels der Feststellbremsfunktion (2) betätigbar sind.

17. Bremsanlage nach einem der vorherigen Ansprüche, **gekennzeichnet durch** elektromechanische Betätigungsorgane, welche zur Bereitstellung der Feststellbremsfunktion (2) betätigbar sind, wobei dieses Betätigen mittels der Feststellbremssteuerfunktion (3) steuerbar ist.

18. Bremsanlage nach Anspruch 17, **dadurch gekennzeichnet, dass** erste Bremsen an dem Fahrzeug, welches ein Zugfahrzeug ist, diese elektromechanischen Betätigungsorgane aufweisen und zweite Bremsen an einem an das Fahrzeug angekoppelten Anhängefahrzeug pneumatisch betätigbare Bremszylinder aufweisen, wobei sowohl die elektromechanischen Betätigungsorgane als auch die pneumatisch betätigbaren Bremszylinder mittels der Feststellbremsfunktion (2) betätigbar sind.

19. Bremsanlage nach einem der vorherigen Ansprüche, **gekennzeichnet durch** eine erste Elektronik, mittels der sowohl die Feststellbremssteuerfunktion (3) als auch die zweite Funktion (5) bzw. eine Steuerung oder Regelung der zweiten Funktion (5) bereitstellbar ist.

20. Bremsanlage nach einem der Ansprüche 1 bis 18, **gekennzeichnet durch** eine erste Elektronik, mittels der die Feststellbremssteuerfunktion (3) bereitstellbar ist, und eine separate zweite Elektronik, mittels der die zweite Funktion (5) bzw. eine Steuerung oder Regelung der zweiten Funktion (5) bereitstellbar ist.

21. Bremsanlage nach Anspruch 20, **gekennzeichnet durch** eine redundant ausgebildete Feststellbremssteuerfunktion (3), wobei diese Feststellbremssteuerfunktion (3) zusätzlich mittels der zweiten Elektronik bereitstellbar ist.

## Claims

1. Brake system for a vehicle, wherein this brake system (1) has a parking brake function (2) for securing the vehicle, wherein this parking brake function (2) includes a parking brake control function (3) for electronically controlling the securing operation, and wherein an electronic and/or electro-pneumatic device (4) of the brake system (1), in particular an air preparation device, an axle modulator, a trailer control valve, a control device of an electronic brake system or a vehicle movement dynamics control device and/or an electro-pneumatic device of the vehicle, in particular an air preparation device or an air spring device, has a second function (5) which differs from the parking brake function (2), **characterized in that** this device (4) has the parking brake control function (3) in addition to the second function (5).

2. Brake system according to Claim 1, **characterized in that** the parking brake function (2) can be made available electro-pneumatically, wherein a pneumatic pressure for ventilating and venting spring energy store components (172) of spring energy store brake cylinders (174) can be modulated electro-pneumatically by means of at least one solenoid valve (38, 40), and wherein this solenoid valve (38, 40) is integrated into the device (4, 6, 34, 211).

3. Brake system according to Claim 1, **characterized in that** the parking brake function (2) can be made available electro-pneumatically, wherein a pneumatic pressure for ventilating and venting energy store components (172) of spring energy store brake cylinders (174) can be modulated electro-pneumatically by means of at least one solenoid valve (10, 22, 38, 40), and wherein this solenoid valve (10, 22, 38, 40) is integrated into at least one valve unit (16, 20, 168, 188) which is attached by means of a flange (18, 24, 32) on the device (4, 14, 26, 162, 179, 186, 208) or on a further valve unit (16) which is attached by a flange to this device (14), wherein this flange (18, 24, 32) has electrical and pneumatic connections between the device (4, 14, 26, 162, 179, 186, 208) and the valve unit (16, 168, 188) or between the further valve unit (20) and the valve unit (16).

4. Brake system according to Claim 3, **characterized in that** the solenoid valve (10, 22, 38, 40) can be connected pneumatically to a compressed air supply (166) via the device (4, 14, 26, 162, 179, 186, 208), and via this device (4, 14, 26, 162, 179, 186, 208) to the spring energy store components (172) of the spring energy store brake cylinders (174).

5. Brake system according to Claim 3 or 4, **characterized in that** the device (4, 26) comprises a plurality of units (28, 30), wherein the valve unit (16) is attached to one of these units (30), wherein, in particular, the device (26) is an air preparation device, and the units (28, 30) are an air drying unit (28) and/or a multi-circuit protection valve unit (30) of this air preparation device (26).

6. Brake system according to one of Claims 2 to 5, **characterized by** at least one relay valve (70) via which the solenoid valve (38, 40) can be connected pneumatically to the spring energy store components (172) of the brake cylinders (174), wherein this relay valve (70) is arranged in the device (4, 34, 162, 186).

7. Brake system according to one of Claims 2 to 5, **characterized by** at least one relay valve (70) via which the solenoid valve (38, 40) can be connected pneumatically to the spring energy store components (172) of the brake cylinders (174), wherein this relay valve (70) is arranged on the device (4, 179, 208) or in the valve unit (168, 188) which is attached to this device (4, 179, 208) by a flange.

8. Brake system according to one of the preceding claims, **characterized in that** the device (4, 6, 14, 26, 162, 179, 186, 208) is an air preparation device by means of which compressed air can be made available to the brake system (1) and/or to another device of the vehicle, in particular to an air suspension device.

9. Brake system according to one of Claims 1 to 7, **characterized in that** the device (4, 6, 14) is a trailer control valve by means of which compressed air for a service brake function of the trailer vehicle can be made available to a trailer vehicle which is coupled to the vehicle.

10. Brake system according to one of Claims 1 to 7, **characterized in that** the device (4, 6, 14) is an air suspension device, wherein this air suspension device (4, 6, 14) has at least one valve (12) by means of which a pneumatic pressure can be modulated and can be made available for raising or lowering the vehicle and/or, if appropriate, a trailer/semi-trailer or parts of the vehicle or trailer/semi-trailer.

11. Brake system according to Claim 2, **characterized in that** the device (4, 6, 14, 34) is an axle modulator with at least two ducts, wherein the solenoid valve (10, 22, 38, 40) is assigned to a first duct, wherein at least a second valve (12, 102, 112) is assigned to at least a second duct, and wherein by means of this second valve (12, 102, 112) a second pneumatic pressure for ventilating and venting diaphragm components of brake cylinders for a service brake function can be modulated.

12. Brake system according to one of Claims 2 to 11, **characterized in that** at least one relay valve (70) is integrated into the device (4, 34, 162, 186) or is attached by a flange to the device (4, 179, 208), wherein a solenoid valve or the solenoid valve (10, 22, 38, 40) can be connected pneumatically to the spring energy store components (172) of the brake cylinders (174) via this relay valve (70).

13. Brake system according to Claim 1, **characterized in that** the device (4) is a central module of an electronic service brake system, and the second function (5) is a central control function of this electronic service brake system.

14. Brake system according to Claim 1, **characterized in that** the device (4, 6, 14) is a module (211) of a vehicle movement dynamics controller, and the second function (5) is a control system for the vehicle movement dynamics of the vehicle and/or of a possibly present trailer vehicle.

15. Brake system according to Claim 14, **characterized in that** the module (211) of the vehicle movement dynamics controller (5) has at least one sensor (214, 216), in particular acceleration sensor (214) and/or yaw rate sensor (216) by means of which data relating to a driving state can be sensed and can be made available to the vehicle movement dynamics controller (5).

16. Brake system according to one of Claims 14 and 15, **characterized in that** when there is a correctly functioning electronic brake system, brakes on individual wheels of the vehicle can be actuated directly by the vehicle movement dynamics controller (5), or activated by means of a service brake function via this electronic brake system, in a targeted manner, and when the electronic brake system has failed, the brakes on wheels, in particular on a rear axle (248), of the vehicle, can be activated by the vehicle movement dynamics controller (5) by means of the parking brake function (2).

17. Brake system according to one of the preceding claims, **characterized by** electro-mechanical activation elements which can be activated to make available the parking brake function (2), wherein this activation can be controlled by means of the parking brake control function (3).

18. Brake system according to Claim 17, **characterized in that** first brakes on the vehicle, which is a tractor vehicle, have these electro-mechanical activation elements, and second brakes on a trailer vehicle, which is coupled to the vehicle, have brake cylinders which can be activated pneumatically, wherein both the electro-mechanical activation elements and the brake cylinders which can be activated pneumatically can be activated by means of the parking brake function (2).

19. Brake system according to one of the preceding claims, **characterized by** a first electronic system by means of which both the parking brake control function (3) and the second function (5) or open-loop or closed-loop control of the second function (5) can be made available.

20. Brake system according to one of Claims 1 to 18, **characterized by** a first electronic system by means of which the parking brake control function (3) can be made available, and a separate second electronic system by means of which the second function (5) or open-loop or closed-loop control of the second function (5) can be made available.

21. Brake system according to Claim 20, **characterized by** a parking brake control function (3) which is of redundant design, wherein this parking brake control function (3) can additionally be made available by means of the second electronic system.

## Revendications

1. Système de freinage pour un véhicule, ce système de freinage (1) présentant une fonction de freinage d'immobilisation (2) pour immobiliser le véhicule, cette fonction de freinage d'immobilisation (2) incluant une fonction de commande de frein d'immobilisation (3) pour la commande électronique de l'immobilisation et un dispositif électronique et/ou électropneumatique (4) du système de freinage (1), notamment un dispositif de conditionnement d'air, un modulateur d'essieu, une vanne de commande d'attelage, un dispositif de commande d'un système de freinage électronique ou un dispositif de régulation dynamique de la conduite, et/ou un dispositif électropneumatique du véhicule, notamment un dispositif de conditionnement d'air ou un dispositif de suspension pneumatique, présentant une deuxième fonction (5), laquelle est différente de la fonction de freinage d'immobilisation (2), **caractérisé en ce que** ce dispositif (4) présente la fonction de commande de frein d'immobilisation (3) en plus de la deuxième fonction (5).

2. Système de freinage selon la revendication 1, **caractérisé en ce que** la fonction de freinage d'immobilisation (2) peut être fournie de manière électropneumatique, une pression pneumatique destinée à acheminer et à évacuer l'air des parties d'accumulation à ressort (172) de vérins de frein à accumulateur à ressort (174) pouvant être commandée de manière électropneumatique à l'aide d'au moins une électrovanne (38, 40) et cette électrovanne (38, 40) étant intégrée dans le dispositif (4, 6, 34, 211).

3. Système de freinage selon la revendication 1, **caractérisé en ce que** la fonction de freinage d'immobilisation (2) peut être fournie de manière électropneumatique, une pression pneumatique destinée à acheminer et à évacuer l'air des parties d'accumulation à ressort (172) de vérins de frein à accumulateur à ressort (174) pouvant être commandée de manière électropneumatique à l'aide d'au moins une électrovanne (10, 22, 38, 40) et cette électrovanne (10, 22, 38, 40) étant intégrée dans au moins un bloc de vannes (16, 20, 168, 188) qui est fixé au dispositif (4, 14, 26, 162, 179, 186, 208) par le biais d'une bride (18, 24, 32) ou à un bloc de vannes supplémentaire (16) fixé par bride à ce dispositif (14), cette bride (18, 24, 32) présentant des liaisons électriques et pneumatiques entre le dispositif (4, 14, 26, 162, 179, 186, 208) et le bloc de vannes (16, 168, 188) ou entre le bloc de vannes supplémentaire (20) et le bloc de vannes (16).

4. Système de freinage selon la revendication 3, **caractérisé en ce que** l'électrovanne (10, 22, 38, 40) peut être reliée pneumatiquement par le biais du dispositif (4, 14, 26, 162, 179, 186, 208) avec une réserve d'air comprimé (166) et, par le biais de ce dispositif (4, 14, 26, 162, 179, 186, 208), avec les parties d'accumulation à ressort (172) des vérins de frein à accumulateur à ressort (174).

5. Système de freinage selon la revendication 3 ou 4, **caractérisé en ce que** le dispositif (4, 26) comprend plusieurs blocs (28, 30), le bloc de vannes (16) étant fixé à l'un de ces blocs (30), le dispositif (26) étant notamment un dispositif de conditionnement d'air et les blocs (28, 30) étant un bloc de séchage d'air (28) et/ou un bloc de vannes de protection à circuits multiples (30) de ce dispositif de conditionnement d'air (26).

6. Système de freinage selon l'une des revendications 2 à 5, **caractérisé par** au moins une vanne relais (70) par le biais de laquelle l'électrovanne (38, 40) peut être reliée pneumatiquement avec les parties d'accumulation à ressort (172) des vérins de freinage (174), cette vanne relais (70) étant disposée dans le dispositif (4, 34, 162, 186).

7. Système de freinage selon l'une des revendications 2 à 5, **caractérisé par** au moins une vanne relais (70) par le biais de laquelle l'électrovanne (38, 40) peut être reliée pneumatiquement avec les parties d'accumulation à ressort (172) des vérins de freinage (174), cette vanne relais (70) étant disposée sur le dispositif (4, 179, 208) ou dans le bloc de vannes (168, 188) fixé par bride à ce dispositif (4, 179, 208).

8. Système de freinage selon l'une des revendications précédentes, **caractérisé en ce que** le dispositif (4, 6, 14, 26, 162, 179, 186, 208) est un dispositif de conditionnement d'air à l'aide duquel de l'air comprimé peut être fourni au système de freinage (1) et/ou à un autre dispositif du véhicule, notamment un dispositif de suspension pneumatique.

9. Système de freinage selon l'une des revendications 1 à 7, **caractérisé en ce que** le dispositif (4, 6, 14) est une vanne de commande d'attelage à l'aide de laquelle de l'air comprimé peut être fourni à un véhicule remorque attelé au véhicule pour une fonction de freinage de service du véhicule remorque.

10. Système de freinage selon l'une des revendications 1 à 7, **caractérisé en ce que** le dispositif (4, 6, 14) est un dispositif de suspension pneumatique, ce dispositif de suspension pneumatique (4, 6, 14) présentant au moins une vanne (12) à l'aide de laquelle une pression pneumatique peut être commandée et peut être fournie pour lever ou abaisser le véhicule et/ou éventuellement un attelage/une semi-remorque ou des parties du véhicule ou de l'attelage/de la semi-remorque.

11. Système de freinage selon la revendication 2, **caractérisé en ce que** le dispositif (4, 6, 14, 34) est un modulateur d'essieu comprenant au moins deux canaux, l'électrovanne (10, 22, 38, 40) étant associée à un premier canal, au moins une deuxième vanne (12, 102, 112) étant associée à au moins un deuxième canal et une deuxième pression pneumatique destinée à acheminer et à évacuer l'air des parties à membrane des vérins de frein pouvant être commandée à l'aide de cette deuxième vanne (12, 102, 112) pour une fonction de freinage de service.

12. Système de freinage selon l'une des revendications 2 à 11, **caractérisé en ce qu'**au moins une vanne relais (70) est intégrée dans le dispositif (4, 34, 162, 186) ou fixée par bride sur le dispositif (4, 179, 208), une ou l'électrovanne (10, 22, 38, 40) pouvant être reliée pneumatiquement par le biais de cette vanne relais (70) avec les parties d'accumulation à ressort (172) des vérins de frein (174).

13. Système de freinage selon la revendication 1, **caractérisé en ce que** le dispositif (4) est un module central d'un système de freinage de service électronique et la deuxième fonction (5) est une fonction de commande centrale de ce système de freinage de service électronique.

14. Système de freinage selon la revendication 1, **caractérisé en ce que** le dispositif (4, 6, 14) est un module (211) d'une régulation dynamique de la conduite et la deuxième fonction (5) est une régulation de la dynamique de conduite du véhicule et/ou d'un véhicule remorque éventuellement présent.

15. Système de freinage selon la revendication 14, **caractérisé en ce que** le module (211) de la régulation dynamique de la conduite (5) présente au moins un capteur (214, 216), notamment un capteur d'accélération (214) et/ou un capteur de taux de lacet (216) par le biais duquel des données sur une situation de conduite peuvent être détectées et fournies à la régulation dynamique de la conduite (5).

16. Système de freinage selon l'une des revendications 14 ou 15, **caractérisé en ce que** dans le cas d'un système de freinage électronique qui fonctionne en toute conformité, les freins sur les roues individuelles du véhicule peuvent être commandés directement de manière ciblée par la régulation dynamique de la conduite (5) ou peuvent être actionnés par le biais de ce système de freinage électronique à l'aide d'une fonction de frein de service et, dans le cas d'une panne du système de freinage électronique, les freins sur les roues, notamment sur un essieu arrière (248), du véhicule peuvent être actionnés par la régulation dynamique de la conduite (5) à l'aide de la fonction de freinage d'immobilisation (2).

17. Système de freinage selon l'une des revendications précédentes, **caractérisé par** des organes à actionnement électromécanique qui peuvent être actionnés pour fournir la fonction de freinage d'immobilisation (2), cet actionnement pouvant être commandé à l'aide de la fonction de commande de frein d'immobilisation (3).

18. Système de freinage selon la revendication 17, **caractérisé en ce que** des premiers freins sur le véhicule, lequel est un véhicule tracteur, présentent ces organes à actionnement électromécanique et des deuxièmes freins sur un véhicule remorque attelé au véhicule présentent des vérins de frein pouvant être actionnés pneumatiquement, les organes à actionnement électromécanique ainsi que les vérins de frein pouvant être actionnés pneumatiquement pouvant être actionnés à l'aide de la fonction de freinage d'immobilisation (2).

19. Système de freinage selon l'une des revendications précédentes, **caractérisé par** une première électronique à l'aide de laquelle peuvent être fournies à la fois la fonction de commande de frein d'immobilisation (3) et la deuxième fonction (5) ou encore une commande ou une régulation de la deuxième fonction (5).

20. Système de freinage selon l'une des revendications 1 à 18, **caractérisé par** une première électronique à l'aide de laquelle peut être fournie la fonction de commande de frein d'immobilisation (3) et une deuxième électronique distincte à l'aide de laquelle peut être fournie la deuxième fonction (5) ou encore une commande ou une régulation de la deuxième fonction (5).

21. Système de freinage selon la revendication 20, **caractérisé par** une fonction de commande de frein d'immobilisation (3) redondante, cette fonction de commande de frein d'immobilisation (3) pouvant en plus être fournie à l'aide de la deuxième électronique.
